# EUROPEAN PATENT APPLICATION

(11) **EP 4 636 617 A1**
(43) Date of publication of application: **22.10.2025**
(21) Application number: 24192733.4
(22) Date of filing: 02.08.2024
(51) Int. Cl.: G06F 21/32, H04L 9/40

(54) **ADAPTABLE NEUROPHYSIOLOGICAL BIOMETRIC AUTHENTICATION SYSTEM AND METHOD**

(30) Priority: 18.04.2024 US 202463635783 P
(71) Applicant: Dotsify, 75020 Paris (FR)
(72) Inventor: SEMAH, Thomas, 75020 Paris (FR); CAILLET, Arnault, 75014 Paris (FR); SHTARBANOV, Ali, Easton, 18045 (US)
(74) Representative: Icosa

(57) **Abstract**

The present invention relates to a neurophysiological biometric authentication system and associated method for securely authenticating a user to access a protected space managed by at least one device, said system comprising at least one processor comprising:
a data centralization sub-processor configured to transmit centralization Metadata, wherein said data centralization sub-processor is configured to receive at least one first biometric data comprising at least one neurophysiological data through an associated data channel and transmit said at least one first biometric data to a user recognition sub-processor; said user recognition sub-processor configured to receive said at least one first biometric data and to output a recognition Metadata as comprising at least protocol Metadata and/or an authentication result to be transmitted to said at least one device to securely authenticate the user to access said protected space.

## Description

### FIELD OF INVENTION

The present invention relates to the field of neurophysiological biometric authentication. In particular, the present invention relates to a neurophysiological biometric authentication system and associated method for securely authenticating a user to access a protected space managed by at least one device.

### BACKGROUND OF INVENTION

Existing authentication technologies - including biometric systems like fingerprint recognition, facial recognition, and iris recognition - have significantly advanced user security and convenience. However, these technologies are not without limitations. For instance, physical biometrics can be replicated or become compromised through sophisticated means. Moreover, they require the user to physically interact with a device, which can be inconvenient or unfeasible in certain situations. In the same way, voice-based authentication faces challenges such as variability in voice patterns, susceptibility to background noise, and security risks like spoofing attacks.

Traditional authentication methods, particularly those relying on knowledge-based authentication (KBA) such as passwords and security questions or token-based authentication (hardware or software tokens) pose significant inconvenience and security risks. Users often forget passwords, reuse the same ones across many devices and applications, or experience difficulty managing multiple passwords and pins, thus highlighting the need for a more intuitive and secure authentication method.

Recent advances with two-factor authentication requiring the user to enter a secondary time-limited code provided to them via an SMS, email, or authenticator app, have added an extra layer of security. However, that is also not without its drawbacks. Two factor authentication while more secure is also more inconvenient and time consuming for the user. If a user doesn't have their phone with them or loses it, then they may find themselves unable to log into their email or other critical accounts, especially when they may need that the most in the case of a lost phone. And if a user has their phone lost or stolen while in a foreign country, it could be devastating when they cannot access any of their accounts requiring two-factor authentication. Many users forget to turn on two factor authentication. Some even intentionally choose not to turn it on because of these risk factors and inconveniences. Moreover, sim-swap attacks and phone scams are a common occurrence and happening with increased frequency in recent years, diminishing the effectiveness of two-factor authentication.

Despite advancements in authentication technologies, a pressing need remains for a system that offers high security, great convenience, and intuitive user experience. Specifically, existing technologies fail to provide a truly individualized authentication method that is both impossible to replicate and does not require any physical action or information memorization from the user. Additionally, current technologies do not adapt to changes in the user's physical condition or environment, potentially reducing their effectiveness and accessibility over time.

The present invention (i.e. Neuro ID) aims to address the limitations from which existing authentication technologies suffer.

### SUMMARY

This present disclosure relates to a neurophysiological biometric authentication system for securely authenticating a user to access a protected space managed by at least one device, said system comprising at least one processor comprising:
- a data centralization sub-processor (i.e. data centralization module) configured to transmit centralization Metadata (i.e. data centralization Metadata), wherein said data centralization sub-processor is configured to receive at least one first biometric data comprising at least one neurophysiological data through an associated data channel and transmit said at least one first biometric data to a user recognition sub-processor (i.e. user recognition module);
- said user recognition sub-processor configured to receive said at least one first biometric data and to output a recognition Metadata (i.e. user recognition Metadata), said user recognition sub-processor comprising at least:
   - a protocol selection sub-processor (i.e. protocol selection module) configured to receive at least said centralization Metadata, and to output protocol Metadata (i.e. protocol selection Metadata) comprising at least an information concerning a data acquisition protocol to be used to collect said at least one first biometric data;
   - an identity generation sub-processor (i.e. NBI generation module) configured to generate at least one first neuro-biometric identifier, NBI, from at least said at least one first biometric data, using a first pretrained machine learning model, said first pretrained machine learning model being previously trained on subjects' data (i.e. a collection of user data from a population of subjects) previously collected using said data channel associated to the at least one first biometric data; and
   - an identity management sub-processor, configured to:
      ∘ compare said at least one first NBI to at least one user signature stored in a memory and output an authentication result; and/or
      ∘ transmit said authentication result to at least one device to securely authenticate the user to access said protected space; and/or
      ∘ save said at least one first NBI as at least one new user signature in said memory;
   said user recognition sub-processor being further configured to generate said recognition Metadata as comprising at least said protocol Metadata and/or said authentication result.

Advantageously, the neurophysiological biometric authentication system offers a convenient and simplified user experience for accessing a protected space while ensuring privacy and security. Privacy is ensured by the difficulty of replication of neurophysiological data, whereas security is achieved through the uniqueness and user-specificity of an NBI, that are generated from highly complex dynamic neurophysiological processes. Consequently, the system provides a personalized authentication experience impossible to replicate (since it is user specific) and does not require any information (e.g. password) memorization from the user simplifying the user experience. Additionally, the authentication system is adaptable to changes in the user's condition (physical or mental) or environment, for instance by using data acquisition protocols chosen based on predefined conditions, or by centralizing and standardizing incoming neurophysiological data channels (i.e. data channels associated to neurophysiological data) from biosensing user environments (e.g., daily life devices like earbuds that integrate neurophysiological sensors) that can evolve between authentication attempts. Moreover, the neurophysiological biometric authentication system offers the possibility to simultaneously leverage several different modalities of biometric data (besides single facial/fingerprint recognition for instance), which increases the reliability of the authentication process. And finally, the authentication system may be seamlessly integrated into everyday devices for enhanced simplicity and convenience.

Advantageously, the identity management sub-processor 115 makes the authentication method adaptable to the variety of received modalities and their related strengths and qualities, so that the multiple multimodal and/or composite NBIs resulting from different channel combinations may be best leveraged to favor increasing the user acceptance rate and/or increasing security, by selecting or aggregating the available NBIs. In comparison, more traditional biometric authentication methods (e.g., facial or fingerprint recognition), which rely on only one biometric modality from one biometric source, cannot provide this level of adaptability.

According to other advantageous aspects of the disclosure, the system comprises one or more of the features described in the following embodiments, taken alone or in any possible combination:

According to one or several embodiments, said recognition Metadata is transmitted to said data centralization sub-processor by said user recognition sub-processor.

According to one or several embodiments, said data acquisition protocol to be used to collect said at least one first biometric data is selected from a set of data acquisition protocols comprising at least one data acquisition protocol.

According to one or several embodiments, said data acquisition protocol to be used to collect said at least one first biometric data is selected from said set of data acquisition protocols based on at least one predefined protocol condition related to at least one of the following:
- a biometric data parameter;
- a user status;
- a user preference;
- an environment of the user;
- a signature availability;
- a use case.

According to one or several embodiments, the data acquisition protocol to be used to collect said at least one first biometric data is synthesized based on at least one predefined protocol condition related to at least one of the following:
- a biometric data parameter;
- a user status;
- a user preference;
- an environment of the user;
- a signature availability;
- a use case.

According to one or several embodiments, a condition score is associated to said at least one predefined protocol condition, and wherein said data acquisition protocol to be used to collect said at least one first biometric data is selected based on said condition score.

According to one or several embodiments, at least one second biometric data different from said at least one first biometric data is received by the data centralization sub-processor.

According to one or several embodiments, said identity generation sub-processor is configured to generate at least one second NBI from said second biometric data, wherein generating said at least one second NBI comprises using a second pretrained machine learning model being previously trained on subjects' data previously collected using a data channel associated to said second biometric data.

According to one or several embodiments, said identity generation sub-processor (114) is configured for selecting said first and/or second biometric data based on a selection criterion to generate said NBI.

According to one or several embodiments, said first and second biometric data are used to generate a combined NBI (i.e. composite NBI, which is obtained from an association of at least two channels to form one combined NBI) using a third pretrained machine learning model, wherein said third pretrained machine learning model has been previously trained on subjects' data previously collected using a data channel combination comprising said data channel associated to said first biometric data and said data channel associated to said second biometric data.

According to one or several embodiments, an authentication score is associated to at least one comparison of at least said first, second and combined NBIs to at least one user signature.

According to one or several embodiments, said identity management sub-processor is further configured to:
- compare at least one of each of said first, second and combined NBIs to at least one user signature stored in a memory, and output an authentication result; and/or
- save at least one of said first, second, and combined NBIs as at least one new user signature in said memory.

According to one or several embodiments, said identity management sub-processor is further configured to:
- calculate a group NBI associated to said first and second NBIs; and
- compare said group NBI to at least one user signature stored in a memory and output an authentication result; and/or
- save said group NBI as at least one new user signature in said memory.

According to one or several embodiments, said user recognition sub-processor further comprises a data diagnostic sub-processor (i.e. data diagnostic module) configured to:
- receive at least said centralization Metadata, wherein said centralization Metadata comprising at least an information about at least one channel configured to transmit a user data, said user data being at least said at least one first biometric data or said at least second biometric data;
- perform at least one of: a first diagnostic process, a second diagnostic process, or a third diagnostic process,
   wherein said first diagnostic process comprises:
      ∘ checking for each channel that said user data is a neurophysiological data; and/or
      ∘ verifying communication between the data centralization sub-processor and said at least one sensor; and/or
      ∘ optionally, analyzing battery status, of said at least one device; and
      ∘ outputting a first group of channels;
   wherein said second diagnostic process comprises calculating at least one quality parameter associated to each channel, said at least one quality parameter being representative of a characteristic of a user data collected using the associated channel, and outputting a second group of channels based on a comparison of said at least one quality parameter to a threshold;
   wherein said third diagnostic process comprises verifying that said user is a human user by identifying a presence of a human signal in at least said first biometric data;
   said data diagnostic sub-processor being configured to generate diagnostic Metadata comprising information related to at least one of said first diagnostic process, said second diagnostic process, said third diagnostic process.

According to one or several embodiments, generated diagnostic Metadata further comprises a group of channels comprising channels belonging to the first group of channels and to the second group of channels.

According to one or several embodiments, said second diagnostic process further consists in ranking each channel based on said at least one quality parameter, wherein said ranking each channel is comprised in said diagnostic Metadata.

According to one or several embodiments, said at least one quality parameter is compared to a threshold.

According to one or several embodiments, said threshold is defined for each channel based on a type of user data transmitted through said each channel.

According to one or several embodiments, authenticating the user is stopped if at least, while performing said first diagnostic process, said user data does not comprise a neurophysiological data.

According to one or several embodiments, authenticating the user is stopped if, while performing said third diagnostic process, said user is not a human.

According to one or several embodiments, said protocol selection sub-processor is further configured to receive said diagnostic Metadata, and to output said protocol Metadata, wherein said protocol Metadata further comprises an information indicative of at least one of:
- a presence of communication between the data centralization sub-processor and at least one sensor to be used to collect a user data; and/or
- a data quality parameter.

According to one or several embodiments, whenever the presence of communication between the data centralization sub-processor and at least one sensor is detected, said data centralization sub-processor is configured to trigger an acquisition using said at least one sensor so to obtain a further user data.

According to one or several embodiments, said centralization sub-processor is further configured to transmit said diagnostic Metadata.

According to one or several embodiments, said user recognition sub-processor further comprises a data preprocessing sub-processor (i.e. data pre-processing module) configured to:
- receive at least said centralization Metadata and at least said at least one biometric data; and
- apply a data pre-processing technique on at least said at least one biometric data;
- output preprocessing Metadata and at least pre-processed at least one biometric data.

According to one or several embodiments, the data preprocessing sub-processor is further configured to calculate at least one preprocessing quality parameter related to said at least one biometric data, and wherein said preprocessing Metadata further comprises said at least one preprocessing quality parameter.

According to one or several embodiments, the data preprocessing sub-processor is further configured to compare said at least one preprocessing quality parameter to a preprocessing threshold and output a comparison result, and wherein said preprocessing Metadata further comprises said comparison result.

According to one or several embodiments, the data preprocessing sub-processor is further configured to:
- receive a further biometric data;
- calculate at least one preprocessing quality parameter related to said further biometric data;
- sort at least said at least one biometric data channel and said further biometric data channel based on the comparison of said at least one preprocessing quality parameter to said preprocessing threshold;
- create a sub-group of channels comprising channels that satisfy a criterion associated to the comparison of said at least one preprocessing quality parameter to said preprocessing threshold;
and wherein said preprocessing Metadata further comprises said sub-group of channels to be further used for data acquisition using at least one sensor.

According to one or several embodiments, said preprocessing threshold comprises: a preprocessing threshold related to said at least one biometric data and a preprocessing threshold related to said further biometric data.

According to one or several embodiments, said user recognition sub-processor further comprises a communication sub-processor (i.e. user-system communication module) configured to receive said authentication result, and generate and output communication Metadata, said communication Metadata comprising at least one of the following:
- a notification for the user about an authentication status;
- an instruction for said at least one device to access said protected space managed by said at least one device;
- an instruction for the user to interact with at least said at least one device.

According to one or several embodiments, said protocol selection sub-processor is further configured to receive said communication Metadata.

According to one or several embodiments, said data centralization sub-processor is further configured to standardize at least said at least one biometric data.

According to one or several embodiments, said system is further configured to interact with an additional (or external) authentication system for securely authenticating said user to access said protected space.

According to one or several embodiments, generating at least one NBI comprises extracting a spatial feature, a temporal feature, and/or a spatiotemporal feature of said at least one biometric data.

According to one or several embodiments, the associated data channel for the first biometric data is an EMG channel and the associated data channel for the second biometric data is an EEG channel.

According to one or several embodiments, the associated data channel for the first biometric data is an EOG channel and the associated data channel for the second biometric data is an EEG channel.

According to one or several embodiments, the associated data channel for the first biometric data is an EOG or an EMG channel and the associated data channel for the second biometric data is an EEG channel.

The present invention further relates to a computer implemented method for securely authenticating a user to access a protected space managed by at least one device, said method implemented by a system according to any of the previous embodiments, said method comprising:
- transmitting said centralization Metadata;
- outputting said protocol Metadata comprising at least an information concerning a data acquisition protocol to be used to collect said at least one first biometric data;
- generating said at least one first NBI,
- comparing said at least one first NBI to at least one user signature stored in a memory and output an authentication result; and/or saving said at least one first NBI as at least one new user signature in said memory;
- transmitting said recognition Metadata to said at least one device to securely authenticate the user to access said protected space.

In addition, the disclosure relates to a computer program product comprising instructions (i.e. software code) to cause the system according to any of the above execution modes to execute the steps of the method for securely authenticating a user compliant with the present disclosure.

The present disclosure further pertains to a non-transitory program storage device readable by a computer (i.e. computer-readable medium), tangibly having stored thereon a computer program of instructions executable by the computer to perform a method for securely authenticating a user compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM, an EPROM (Erasable Programmable ROM) or a Flash memory, a portable CD-ROM (Compact-Disc ROM).

### DEFINITIONS

In the present invention, the following terms have the following meanings:

The terms **"adapted"** and **"configured"** are used in the present disclosure as broadly encompassing initial configuration, later adaptation or complementation of the present device, or any combination thereof alike, whether effected through material or software means (including firmware).

The term **"processor"** should not be construed to be restricted to hardware capable of executing software, and refers in a general way to a processing device, which can for example include a computer, a microprocessor, an integrated circuit, or a programmable logic device (PLD). The processor may also encompass one or more Graphics Processing Units (GPU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

**"Machine learning (ML)"** designates in a traditional way computer algorithms improving automatically through experience, on the ground of training data enabling to adjust parameters of computer models through gap reductions between expected outputs extracted from the training data and evaluated outputs computed by the computer models.

A **"hyper-parameter"** presently means a parameter used to carry out an upstream control of a model construction, such as a remembering-forgetting balance in sample selection or a width of a time window, by contrast with a parameter of a model itself, which depends on specific situations. In ML applications, hyper-parameters are used to control the learning process.

**"Datasets"** are collections of data used to build an ML mathematical model, so as to make data-driven predictions or decisions. In **"supervised learning"** (i.e. inferring functions from known input-output examples in the form of labelled training data), three types of ML datasets (also designated as ML sets) are typically dedicated to three respective kinds of tasks: **"training",** i.e. fitting the parameters, **"validation",** i.e. tuning ML hyperparameters (which are parameters used to control the learning process), and **"testing",** i.e. checking independently of a training dataset exploited for building a mathematical model that the latter model provides satisfying results.

A **"neural network (NN)"** designates a category of ML comprising nodes (called **"neurons"**)**,** and connections between neurons modeled by **"weights".** For each neuron, an output is given in function of an input or a set of inputs by an **"activation function".** Neurons are generally organized into multiple **"layers",** so that neurons of one layer connect only to neurons of the immediately preceding and immediately following layers.

The above ML definitions are compliant with their usual meaning, and can be completed with numerous associated features and properties, and definitions of related numerical objects, well known to a person skilled in the ML field. Additional terms will be defined, specified or commented wherever useful throughout the following description.

A **"signal"** is the analog or digital output of a sensor that carries any type of data that contains information of a phenomenon or process.

**"Data"** is a collection of values conveying information. A signal carries data.

A **"neurophysiological signal"** refers to physiological activity that is closely related to the nervous system's function. A neurophysiological signal can either refer to:
- some neural activity generated by the nervous system (e.g., electroencephalographic (EEG), electrocorticographic (ECoG), individual cellular signals)
- other physiological activities that are directly related to neural activity generated by the nervous system (e.g., electromyographic (EMG) and Magnetoencephalographic (MEG) signals, or Blood oxygenation level-dependent (BOLD) and cerebral blood flow and volume (CBF, CBV) signals captured with Functional Magnetic Resonance Imaging (fMRI), Function Near-Infrared Spectroscopy (fNIRS), or Positron Emission Tomography (PET))
- physiological responses to neural activity generated by the nervous system (e.g., electrocardiographic (ECG) signals, Electrooculographic (EOG), Galvanic skin response (GSR), Photoplethysmography (PPG), Electroretinogram (ERG) signals)

Neurophysiological signals may be electrograms (EEG and related, ECoG, EMG and related, EGG, ECG, EOG, EDA, ERG), bioelectric signals (EEG and related, ECoG, LFPs, EMG and related, EGG, ECG, EOG, EDA, ERG), optical signals (PPG), magnetic signals (MEG), or hemodynamic signals (BOLD, CBF, CBV).

**"Biometric Data"** or BD are person-specific characteristics of the human body.
- Np-BD are Neurophysiological Biometric Data, carried by neurophysiological signals such as EEG, MEG, BOLD, etc.
- {Np-BD} are Non-Neurophysiological biometric data:
   ο {P-BD} - Physiological data (DNA, respiration, temperature, etc.)
   ∘ {A-BD} - Anatomical data (Fingerprint, Face, Ear canal, Iris, etc.)
   o {B-BD} - Behavioral data (voice, gait, signature dynamics, etc.)

A **"Biometric marker"** is a measurable and distinctive characteristic or trait of an individual that is extracted from biometric data and can be used to authenticate them.

A **"Neurophysiological marker"** is a biometric marker extracted from neurophysiological data. It may be a user-specific trait or pattern of a neurophysiological signal, user-specific correlations between patterns of a neurophysiological signals or of a plurality of neurophysiological signals.

A **"modality"** refers to a specific type or category of measurement of biometric data. For example, EEG and MEG are two different neurophysiological modalities of the neural activity of the brain.

**"Biometric sources"** refer to the elements of the human body from which biometric data ({Np-BD} or {Np-BD}) may be captured. For example, individual muscles (e.g., the masseter muscle) and/or groups of muscles (e.g., wrist muscle flexors) are biometric sources of EMG data. The frontal lobe, temporal love, motor cortex, somatosensory cortex, parietal lobe, and occipital lobe of the brain are biometric sources of EEG, MEG, or ECoG data. The tip of the ten fingers are biometric sources for fingerprint data. Of note, two different modalities may capture biometric data from the same biometric source (e.g., EEG and MEG targeting regions of the brain). Two different biometric sources may be targeted by the same modality (e.g., multiple brain compartments targeted by EEG modality through multiple EEG sensors, or multiple muscles targeted by EMG modality through multiple EMG sensors, or multiple fingertips targeted by fingerprint modality).

A **"sensor"** is a device which detects a physical property and produces an analog or digital output corresponding to the property being measured. The input component of a sensor is referred to as a **sensor electrode** when it makes direct contact with the medium being measured. The output component of a sensor is referred to as the **digital or analog interface** of the sensor. For a sensor that makes measurements continuously or at discrete time intervals, the output from the analog (or) digital interface of that sensor is called **analog signal** (or) **datastream,** respectively. Depending on the type of biometric data investigated, sensors may be of various types, including, but not limited to, bioelectric (e.g., for EEG, EMG, EOG measurements), optical (e.g., for PPG, facial geometry measurements), bioacoustics (e.g., for voice characteristics measurements), motion (e.g., for gait kinematics measurements), temperature, or magnetic sensors (e.g., for MEG measurements). A **"Biometric sensor"** is any sensor configured for the capture of biometric data. A **"Neurophysiological biometric sensor"** is any sensor configured for the capture of neurophysiological biometric data. For example, an EEG sensor is a bioelectric sensor electrode configured to detect neural activity from the brain and convert it into an electric analog signal representing the EEG modality (sensor electrode in direct contact with the scalp of the user).

**"Biosensing user environment"** is the collection of all biometric sensors in the environment where a user is currently located. The activity of a plurality of biometric sources detected by the biosensing user environment in a plurality of biometric modalities is leveraged for advanced user authentication.

A **"Data Acquisition System",** DAQ, is a collection of hardware and software that allows one to measure and control the physical and/or digital characteristics of something in the real world. In the current disclosure a DAQ is any system that interfaces with the biosensing environment, or a fraction of the biosensing environment, to capture, collect, and pre-process biometric data. The components of a DAQ may include some signal conditioning circuitry to convert sensor signals into a form that can be converted to digital values and Analog-to-digital converters, to convert conditioned sensor signals to digital values.

**"Metadata":** DAQs output digital datastreams representing the signals acquired by the input sensors, as well as accompanying information, named Metadata, on sensor configuration, signal condition, and signal conversion.

The **"Data Centralization Module"** is the component of the system that centralizes the channels, datasteams, and centralization Metadata output by DAQs. The data centralization module standardizes the input data and transmits in real-time the standardized datastreams and centralization Metadata to the user recognition module. The data centralization module is configured to receive and relay at least one neurophysiological channel.

A **"channel"** is the pathway through which biometric data flows from a sensor to the user recognition module via two transit points, that are a DAQ and the data centralization module. Some biometric data, in the form of an analog signal or a digital datastream, flows between a sensor and the hardware unit of the dedicated DAQ (first junction of the channel), where it is converted into a new digital datastream that flows to the data centralization module (second junction of the dedicated channel), where it is standardized, after which it flows to the user recognition module (third junction of the dedicated channel). One channel is defined for each input biometric sensor. Therefore, a biosensing user environment that involves more than one sensor yields a plurality of channels. A channel may carry any type of biometric data. A channel that carries a neurophysiological signal, a neurophysiological datastream, or more generally data is named a neurophysiological data channel, or a neurophysiological channel. For example, a biosensing user environment of three EEG electrodes placed on the user's scalp yields three EEG channels through which EEG datastreams flow to the user recognition module.

**"Stand-alone devices"** are devices that integrate a DAQ and relate to a set of sensors for the sole purpose of collecting biometric data. **"Multi-purpose devices"** are devices that have other purpose besides collecting biometric data, like earbuds that can stream auditory signals (e.g., play music) and record acoustic signals (e.g. capture voice signals with a microphone) but may also integrate neurophysiological sensors and a DAQ for collecting neurophysiological signals and outputting neurophysiological datastreams through neurophysiological channels.

For authentication purposes, biometric markers are extracted from biometric data to generate a set of individual-specific features called an **'Identifier'.** The Identifier encodes the user-specificity unveiled by biometric markers and is the element used to perform the authentication of the individual. In its simplest form, an Identifier may be a mathematical structure that concatenates user-specific values for a set of pre-determined biometric markers. **Biometric identifier (BI)** is an identifier generated only from non-neurophysiological biometric data {Np-BD}. **Neuro-Biometric Identifier (NBI)** is an identifier generated from biometric data that includes at least one channel of neurophysiological data {Np-BD}. The NBI can result from multiple neurophysiological data channels or a combination of neurophysiological and non-neurophysiological data channels. For example, an Identifier generated from the data of a combination of one EEG channel and one fingerprint channel is an NBI.

A composite NBI or BI is an Identifier that is generated using a combination of at least two different channels containing biometric data from at least two different biometric sources. Of note, composite Identifiers may be generated from channels of the same modality. For example, an Identifier generated from two EMG channels of two different muscles (the biometric sources) is a composite NBI.

A multimodal BI or NBI is an Identifier that is generated using a combination of at least two channels containing biometric data of different modalities. For example, an Identifier generated from one EEG channel and one EMG channel is a multimodal NBI. Of note, multimodal Identifiers may be generated from channels of the same biometric source.

Multimodal and Composite Identifiers are alternatively named `Combined' Identifiers and aim to capture different characteristics and potential inter-relations of the individual's biometry, which advantageously yields highly user-specific Identifiers of enhanced security, as opposed to Identifiers generated from a single channel and/or modality (facial recognition, retinal recognition, etc).

A **"signature"** is a stored reference template specific to the user's biometry that is compared to an Identifier during the authentication process. Successful comparison leads to successful user authentication. Advantageously, a signature should be compared to an Identifier that was generated in the same conditions of biometric channel combinations and data acquisition protocol. Multiple signatures may be stored for a user.

**"External Credentials",** EC, refer to possession credentials (what the individual has) and knowledge credentials (what the individual knows) that may also be used to perform authentication. For example, external credentials may be USB tokens, smart keys, or smart cards (possession credentials) or passwords, PINs, or passphrases (knowledge credentials). External Credentials are means of authentication different from Identifiers, which rely on biometric data (what the individual is).

The **"User Recognition Module"** is the component of the system that converts input biometric data, acquired following a best selected data acquisition protocol, into an authentication output result. The user recognition module first selects a best data acquisition protocol, following which biometric data is collected and relayed by the data centralization module to the user recognition module, that converts the biometric data into one or more NBIs and compares the one or more NBIs to stored signatures to output an authentication result. To do so, the user recognition module comprises at least a protocol selection module, an NBI generation module, and a Neuro IDentity - Neuro ID - management module. Advantageously, the user recognition module may also comprise an optional data diagnostic module, an optional data pre-processing module, and an optional data transformation module.

The **"Device Ensemble"** (i.e. ensemble of devices) refers to the one or more electronic devices in the user's physical environment. The Device Ensemble integrates at least one device that provides at least one neurophysiological channel to the data centralization module, like stand-alone and multi-purpose devices. The Device Ensemble also integrates at least one device that creates and manages the Protected Space. For example, in a use case of keyless vehicle access, the Device Ensemble integrates a pair of earbuds, a smartphone, a smartwatch, and the car. The earbuds and the smartwatch are multi-purpose devices. The car is the 'lock' device and gives access the `Car Space' when authentication is successful. The smartphone carries the data centralization and user recognition modules.

A **"protected space"** is a dedicated digital or physical environment for the user (e.g., a user account, car, house, ledger, etc.), accessible via at least one device of the Device Ensemble. To access the Protected Space, the user requires to be authenticated.

### BRIEF DESCRIPTION OF THE DRAWINGS

The present disclosure will be better understood, and other specific features and advantages will emerge upon reading the following description of particular and non-restrictive illustrative embodiments, the description making reference to the annexed drawings wherein:
**Figure 1** is a block diagram representing schematically a particular mode of a neurophysiological biometric authentication system for securely authenticating a user to access a protected space managed by at least one device, compliant with the present disclosure;
**Figures 2A****,** **2B****,** **2C****,** **2D****,** **2E****,** **2F** provide blocks diagrams schematically representing the different functionalities of the sub-processors/ modules of the system of the present invention;
**Figure 3** is an illustration of example 1 related to the association of the authentication system with a password manager;
**Figure 4** is a block diagram representing schematically a particular mode of an authentication process executed by the neurophysiological biometric authentication system;
**Figure 5** is an example of a physical environment, in which a user is operating a wearable multi-purpose device that serves for unlocking, with the neurophysiological biometric authentication system (1), and functions within a protected space that includes one or more screens;
**Figure 6** is an example of login operation with the neurophysiological biometric authentication system to access a protected space (1);
**Figure 7** is an example of a physical environment, in which a user is operating a wearable electronic device to access a keyless vehicle with the neurophysiological biometric authentication system (1);
**Figure 8** is an example of multi-purpose smart glasses, headset device and smartwatch that integrate neurophysiological sensors used for neurophysiological authentication.

On the figures, the drawings are not to scale, and identical or similar elements are designated by the same references.

### ILLUSTRATIVE EMBODIMENTS

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

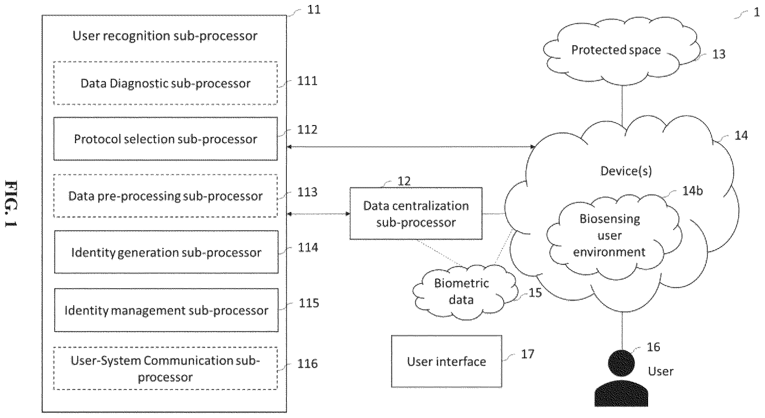

The present disclosure will be described in reference to a particular functional embodiment of a system 1 for securely authenticating a user to access a protected space managed by at least one device, as illustrated on **Figure 1****.**

Though the presently described system 1 is versatile and provided with several functions that can be carried out alternatively or in any cumulative way, other implementations within the scope of the present disclosure include systems having only parts of the present functionalities.

System 1 is advantageously an apparatus, or a physical part of an apparatus, designed, configured and/or adapted for performing the mentioned functions and produce the mentioned effects or results. In alternative implementations, the system is embodied as a set of apparatus or physical parts of apparatus, whether grouped in a same machine or in different, possibly remote, machines. The device 1 may e.g. have functions distributed over a cloud infrastructure and be available to users as a cloud-based service, or have remote functions accessible through an API.

The system 1 may be integrated in a same apparatus or set of apparatus, and intended to be used by the same user.

In what follows, the modules (i.e. sub-processors) are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the system 1.

The system 1 comprises a data centralization sub-processor 12 (i.e. data centralization module) configured to transmit centralization Metadata to a user recognition sub-processor 11 and/or to any sub-processor comprised in the user recognition sub-processor 11. The data centralization sub-processor 12 is further configured to receive at least one first biometric data 15 comprising at least one neurophysiological data through an associated data channel and transmit the at least one first biometric data 15 to a user recognition sub-processor 11 (i.e. user recognition module). The biometric data 15 may be captured, transmitted, recorded or analyzed in chunks or as a whole data sequence.

Centralization Metadata may comprise information related to available biometric channels. Centralization Metadata may comprise any information that must be known by the user recognition sub-processor 11 to perform an authentication process with respect to the available biometric channels. The authentication process may comprise any possible combination of functions of the sub-processors of the authentication system 1. The centralization Metadata may be provided by the DAQs or the devices that integrate the DAQs.

Centralization Metadata may comprise at least an information about at least one channel configured to transmit a user data (e.g. a biometric data). The information about at least one channel may be related to:
- a sensor type (e.g. bioelectric, acoustic, optical), as well as technical specificities of the sensor, such as the size or the material of the sensor used to collect the biometric data 15;
- a sensor placement configuration, such as the physical placement and configuration of the sensor in the user's environment or on the user's body (e.g., EEG sensor position, PPG sensor attachment location, accelerometers mounting orientations). The sensor location may be given in the reference frame of the at least one device 14 that integrates the sensor (e.g., the cartesian coordinates or a neurophysiological sensor in a multi-purpose device). In case of electrode sensor, that type of centralization Metadata provides information on the biometric sources from which biometric data 15 is acquired;
- a modality of the biometric data 15 (e.g., EEG, PPG). If this information is not given by the DAQ, it may be deduced from the sensor type, the sensor placement configuration, and the data recording conditions of the DAQ. Of note, a DAQ may be configured to relay a specific modality from a bioelectric signal; for example, a bioelectric signal captured at the temple may contain a mixture of EEG and EMG data from the brain and muscle activity but may be relayed to the data centralization module 12 as an EEG datastream in an EEG channel of the EEG modality by a DAQ that applies filtering in the range 1-30 Hz and samples at 128Hz;
- the conditions in which the DAQs collect and transform the biometric data 15. In the case of analog signals (e.g., neurophysiological signals), these conditions may relate to signal conditioning, such as signal amplification, filtering, isolation of processes, range matching, etc. These conditions may also relate to analog-to-digital conversion, with parameters like signal sampling frequency rate of neurophysiological signals or the resolution of image-based biometric data;
- the network connectivity, such as the status of network connections between a sensor, its dedicated DAQ, and the data centralization module 12, including information about presence of communication, transmission rates, packet loss, or network latency. Information on the absence of communication with a sensor may also be gathered;
- timestamps, i.e., the time when the data was collected for each channel;
- the calibration status of the sensors and current calibration parameters;
- the specificities of the DAQ or device, such as model, serial number, or firmware version;
- data quality metrics, that may be computed by the DAQs;
- the battery status of the DAQs and/or the device 14.

The centralization Metadata may be synthesized by the data centralization module 12 at any time before or during data acquisition, and before or after the authentication process onsets. Advantageously, some centralization Metadata, associated with an ensemble of channels related to a specific DAQ or multi-purpose/stand-alone device, may be stored in a memory, when such centralization Metadata relates to hardcoded specificities of those DAQs and devices that are not expected to change between sessions.

Once centralization Metadata is synthesized by the data centralization module 12, it is known what biometric channels are available for authentication, the information they are expected to carry (e.g., data modality and biometric source), and the conditions in which they will be received. During phases of data acquisition, a biometric data is associated for each biometric channel.

Biometric data may be neurophysiological biometric data or non-neurophysiological biometric data acquired from the user.

Neurophysiological biometric data (i.e., neurophysiological signals) can be direct measurements of neural activity generated by the nervous system, like:
- Electroencephalographic (EEG) signals: the electrical activity of the brain, i.e., the mixture signal generated by the simultaneous electrical activity of populations of neurons in the brain, including event-related potentials (ERPs);
- Electrocorticographic (ECoG) signals: the electrical activity of the brain, i.e., the mixture signal generated by the simultaneous electrical activity of populations of neurons in the brain;
- Individual cellular signals: the electrical activity of single neurons, for example brain or motor neurons, with invasive methods (e.g., intracranial or intramuscular microelectrodes recording iEEG or iEMG) or with non-invasive methods (e.g., source-separation methods applied to high-density signal recordings resulting in single-cell EEG or EMG). Also applies to Local Field Potential (LFPs) signals.

Neurophysiological biometric data may also be indirect measurements of neural activity generated by the nervous system, via direct measurements of processes directly related to and descriptive of neural activity, like:
- Magnetoencephalographic (MEG) signals: magnetic fields produced by electrical activity of the brain, i.e., the mixture signal generated by the simultaneous electrical activity of populations of neurons in the brain;
- Blood oxygenation level-dependent (BOLD) and/or cerebral blood flow and volume (CBF, CBV) and/or hemodynamic (Oxygenated Hemoglobin HbO2, Deoxygenated Hemoglobin HbR) signals measured with Functional Magnetic Resonance Imaging (fMRI), and/or Function Near-Infrared Spectroscopy (fNIRS), and/or Positron Emission Tomography (PET): changes in blood flow and blood oxygenation levels related to changes in neural activity in brain regions;
- Electromyographic (EMG) signals: the electrical activity of skeletal muscles, i.e., the mixture signal generated by the simultaneous electrical activity of populations of motoneurons and motor units in the muscles. Because motoneuronal action potentials are always transmitted to the innervated muscle fibres, EMG activity is a direct amplified mixture reflection of motor neural activity, that is the direct response to upper motor neurons activity, relayed by spinal cord circuits and regulated by sensory feedback;
- Electrogastrographic (EGG) signals: the electrical activity of the stomach, i.e., the electrical potentials of the smooth muscle cells in the stomach during the digestive process. Like EMG, EGG is a mixture representation of the enteric nervous system's activity, that is feedback looped to the central nervous system.

In this context, neurophysiological biometric data may be measurements of physiological activity that are the direct response to neural activity generated by the regulatory nervous system of the user, like:
- Electrocardiographic (ECG) signals: measure the electrical activity of the cardiac muscle's depolarization and repolarization process during cardiac circles. Cardiac activity is directly regulated by the neural activity of the sympathetic and parasympathetic nervous systems;
- Electrooculographic (EOG) signals: measure the changes in electrical activity related to eye movement, i.e., the varying corneo-retinal standing potential activity between the front and the back of the eyes during eye movement. EOG results from the coordinated activation of ocular muscles, that are directly controlled by the nervous system and relayed by oculomotor pathways;
- Galvanic skin response (GSR) signals: measure the Electrodermal activity (EDA), i.e., the changes in skin conductance, that directly varies in response to the sympathetic branch of the autonomic nervous system's activity regulating the sweat gland activity in the skin;
- Photoplethysmography (PPG) signals: measure the changes in blood-volume in peripheral blood vessels, that directly vary in response to autonomic nervous system's regulatory activity, relayed by cardiac activity and vascular tone;
- Electroretinogram (ERG): time-series recording of the electrical responses of the retina, for example to light stimuli.

Neurophysiological biometric data may therefore include, but are not limited to, the types of signals listed above. In the context of the present disclosure, neurophysiological biometric data may therefore be electrograms (EEG and related, ECoG, EMG and related, EGG, ECG, EOG, EDA, ERG), bioelectric signals (EEG and related, ECoG, LFPs, EMG and related, EGG, ECG, EOG, EDA, ERG), optical signals (PPG), magnetic signals (MEG), or hemodynamic signals (BOLD, CBF, CBV, HbO2, HbR).

Neurophysiological signals are a class of biometric data (i.e., neurophysiological biometric data {Np-BD}) as the information content of neurophysiological signals and their intrinsic patterns are influenced by intrinsic physiological factors that are highly person-specific, yielding a unique neuro-cognitive print identity for each individual. These intrinsic person-specific patterns may be successfully processed, analyzed, and utilized for authentication purposes. For example, the information content of EEG signals varies between individuals due to inter-related factors such as neural functional organization, neural network architecture neural connectivity, or brain anatomy. As another example, EMG signals will vary between individuals because of person-specific differences in neural control strategies (e.g., muscle synergies, neural synergies, motor unit recruitment and discharge strategies), muscle physiological properties (e.g., innervation ratio, distribution of motor unit electrophysiological properties, muscle size), muscle morphology and anatomical properties (e.g., filtering properties of the subcutaneous layer and muscle tissues). EOG, for example, is also strongly person-specific, because of unique patterns of eye movements and fixation resulting from person-specific oculomotor control strategies, eye muscle properties, or eye anatomy. Neurophysiological patterns are also influenced by other person-specific factors including neurogenesis, which is conditioned both on genetics and environmental factors, and life experiences.

Non-neurophysiological biometric data (i.e. Non-neurophysiological data, or Non-neurophysiological signals {Np-BD}) may also be received from specific sensors in the user's physical environment and may be used in combination with at least one neurophysiological data {Np-BD} to strengthen the user-specificity of the resulting NBI.

Non-neurophysiological biometric data {Np-BD} may encompass other physiological data '{P-BD}', such as, but not limited to, DNA, respiration patterns, or body temperature. Non-neurophysiological biometric data may also include Anatomical data '{A-BD}'. Anatomical biometric data may encompass, but are not limited to, fingerprint and/or palmprint geometry patterns, facial geometry (for facial recognition), hand geometry, ear and/or ear canal geometry, iris architecture, retinal architecture, or vein patterns. Non-neurophysiological biometric data may also include Behavioral data '{B-BD}'. Behavioral biometric data may encompass, but are not limited to, voice characteristics (e.g., speech patterns, pitch, tone, cadence), keystroke dynamics, gait kinematics, signature dynamics, or eye dynamics (via eye-tracking). Depending on the type of data measured, {P-BD}, {B-BD}, and {A-BD} data may be of various types, such acoustics signals (e.g., bioacoustics-based voice signals), optical signals (e.g., sonar-based inner ear reconstruction or fingerprint images), magnetic signals (e.g., cranial bones characterization with magnetic resonance imaging (MRI)), airflow signals (e.g., breathing patterns), etc.

The data centralization sub-processor 12 may receive, centralize, and/or standardize the available biometric channels and associated biometric data.

The data centralization sub-processor 12 may receive biometric data in two cases: when a biometric data 15 is captured (i.e., acquired) for the purpose of diagnostic (performed by the data diagnostic sub-processor 111) or when biometric data 15 is captured following a selection of a best data acquisition protocol (selected by the protocol selection sub-processor 112) for the purpose of authentication. In these situations, the data centralization sub-processor 12 may receive data from at least one DAQ that projects at least one biometric channel to the data centralization sub-processor 12 through which datastreams flow. The data centralization sub-processor 12 may centralize the biometric data 15 by grouping the available biometric channels. The data centralization sub-processor 12 may use the centralization Metadata to identify channels that are centralized.

The data centralization sub-processor 12 may standardize the biometric data carried by the available channels in order to harmonize the biometric data received by the DAQs into a similar standard format. In this optic, the data centralization sub-processor 12 may:
- convert the biometric data format (e.g., EDF, jpg, eeg formats) into a unique standardized universal format (e.g., JSON, XML, CSV);
- re-sample the biometric data (i.e. datastreams) into a standard sampling frequency (e.g., 1024Hz for EMG channels, 128Hz for EEG channels, 2Hz for BOLD signals, or 128Hz for PPG signals), so that to synchronize datastreams;
- timestamp synchronize time-dependent channels, which is crucial for correlating events and patterns in the creation of composite NBIs;
- compress the biometric data to reduce bandwidth requirements during transmission;
- aggregate data chunks received by the DAQs that may have different transmission rates, into segments of pre-determined lengths.

The user recognition sub-processor 11 may be configured to receive at least one first biometric data 15 from the data centralization sub-processor 12 and to output recognition Metadata.

The user recognition sub-processor 11 may comprise at least:
- a protocol selection sub-processor 112 (i.e., protocol selection module) configured to receive at least the centralization Metadata, and to output protocol Metadata comprising at least information concerning a data acquisition protocol to be used to collect the at least one first biometric data;
- an identity generation sub-processor 114 (i.e. identity generation module) configured to generate at least one first neuro-biometric identifier, NBI, from at least the at least one first biometric data, using a first pretrained machine learning model; and
- an identity management sub-processor 115, configured to:
   ∘ compare the at least one first NBI to at least one user signature stored in a memory and output an authentication result; and/or
   ∘ transmit the authentication result to at least one device 14 to securely authenticate the user to access the protected space 13; and/or
   ∘ save the at least one first NBI as at least one new user signature in the memory.

According to one embodiment, the first pretrained machine learning model has been previously trained on (subjects') data previously collected from a plurality of subjects using the data channel associated to the at least one first biometric data. Said plurality of subject may as well comprise data collected from the user himself.

The user recognition sub-processor 11 may be further configured to generate the recognition Metadata as comprising at least the protocol Metadata and/or the authentication result.

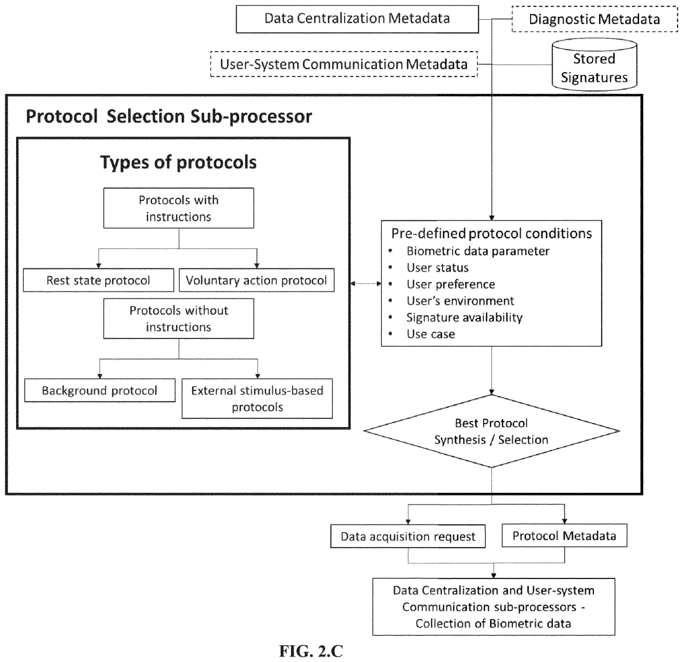

Figure 2C comprises an illustrative embodiment of the protocol selection sub-processor 112 and its multiple functionalities that will be described in detail below.

The protocol Metadata may comprise at least information on the content of the data acquisition protocol.

According to one embodiment, the data acquisition protocol to be used to collect the at least one first biometric data may be selected from a set of data acquisition protocols comprising at least one predefined data acquisition protocol or, alternatively, it may be synthetized on the base of at least one determined condition.

The set of data acquisition protocols may involve at least four different levels of the user's engagement with the authentication system 1. For example, the biometric data may be measured without the user's knowledge (no instruction, no trigger, `background' protocol), as the response of an external stimulus (no instruction, external trigger, `external stimulus-based' protocol), at voluntary rest state (instructions, no trigger, `rest state' protocol) or as the result of a voluntary action from the user (instructions, voluntary trigger, `voluntary action' protocol). Therefore, three of the four possible types of protocols require a mean of interaction with the user to deriver stimuli or instructions.

The data acquisition protocols that do not involve receiving instructions from the authentication system 1 and voluntarily engaging with the system (i.e., background and external stimulus-based protocols) may give a seamless experience to the user, enhancing their user's experience and decreasing mental fatigue, which may be detrimental to the authentication process. In some embodiments of background and external stimulus-based protocols with sufficient computational power and battery capacity, continuous streaming and authentication may be performed, as the neurophysiological activity is continuously detected by the neurophysiological sensors. The protocols that involve receiving instructions from the authentication system and voluntarily engaging with the system (i.e., voluntary state and action protocols) and those that rely on a calibrated external stimulus (i.e., external stimulus-based protocols) require the authentication tasks to be localized and constrained in time, although they enable generating a NBI in a controlled and pre-determined environment, which enhances the accuracy of the generated NBIs.

According to one embodiment, the data acquisition protocol is synthetized using at least one of the following information:
- a biometric data parameter;
- a user status;
- a user preference;
- an environment of the user;
- a signature availability;
- a use case.

According to one alternative embodiment, the data acquisition protocol is selected from the set of data acquisition protocols based on at least one predefined protocol condition related to at least one of the following:
- a biometric data parameter;
- a user status;
- a user preference;
- an environment of the user;
- a signature availability;
- a use case.

A predefined protocol condition related to a biometric data parameter may be the maximum information content in the captured neurophysiological data. The information content may be related to the amount and the quality of neurophysiological markers that are extracted from the channels. Advantageously, the information content is user-specific, allowing the generation of user-specific NBIs. To determine a best protocol that maximizes the information content of the data from a maximum number of available channels, the protocol selection module 112 leverages information from the centralization Metadata and optional diagnostic Metadata, notably on, but not limited to:
- the number of available channels,
- the type of biometric data (modalities) of each channel,
- the biometric sources targeted by each channel,
- at least one quality parameter provided in the diagnostic Metadata.

The information content of a neurophysiological channel may be maximized by triggering activity from the biometric source from which the biometric data 15 is captured. The protocol selection module 112 therefore may select a protocol that maximizes the activity of the neurophysiological sources. Some examples of protocols related to specific biometric channels are proposed below:
- EMG channels: voluntary contraction protocol with the muscles targeted by the EMG sensors. EMG data is only detected with EMG sensors if the targeted muscle is contracting. Moreover, stronger contractions increase the signal-to-noise ratio, while more motor units are recruited and have discharge activity, all of which result in an EMG channel of higher information content;
- EEG or hemodynamic (generated by fNIRS, for example) channels on the temporal lobe: external auditory stimulus or auditory imagery protocols;
- EEG or hemodynamic (generated by fNIRS, for example) channels on the occipital lobe: rest state protocol, external visual stimuli, or visual imagery protocols;
- EEG or hemodynamic (generated by fNIRS, for example) channels on the motor cortex: movement imagery, voluntary muscle contraction protocols;
- EOG channels: external visual stimuli protocols.

When available channels are identified to be competing channels, the protocol selection module 112 may make a decision based on pre-determined conditions and favors maximizing the information content of one set of channels at the expense of the others. Competing channels are channels for which it is not possible or challenging to concurrently maximize the information content. For example, it is challenging to maximize the information content in the theta waves of EEG signals, associated with deep relaxed states, while maximizing that of voluntary EMG muscle activity. Situations of competing channels also arise when maximizing the information content of one neurophysiological channel is detrimental to one or more other channels (e.g., important EMG activity of the facial muscles substantially pollutes EEG signals and masks the information content generated by brain activity).

In case of competing channels, the protocol selection module 112 may decide which channel or set of channels to favor, i.e., the information content of which is maximized, based on pre-determined conditions, that may rely, for example, on:
- the connectivity and quality parameters resulting from the receiving (e.g. data centralization module 12, user recognition module 11) and/or diagnostic modules (data diagnostic module 111), i.e., the channels with the best parameters are favored;
- the typical amount of user-specific content held in the competing channels, i.e., the channels with the highest user-specific information content may be favored. The latter may be determined by the typical authentication results obtained with each channel. For example, EEG signals from the scalp may provide more user-specific information content than high EMG activity from the competing facial muscles, in which case the protocol selection module 112 will favor a protocol that focuses on important EEG activity and mild facial EMG activity.

A predefined protocol condition related to a signature availability (i.e. protocol-specific signature availability) may be comparing at least one NBI to a stored signature to perform the authentication. In such example, the NBI and the stored signature encode the user-specificity of specific neurophysiological markers. For two same conditions of environment of sensors and available channels, some neurophysiological markers may or may not be detected depending on the activity of the biometric sources. As a result, an NBI and a signature may not encode the same neurophysiological markers if they were generated using different data acquisition protocols that would stimulate the biometric source differently. In such situation, the NBI and the signature, that result from different data acquisition protocols, may not compare sufficiently well to achieve user authentication, although both may encode neurophysiological information that is highly specific to the user. For example, an NBI and a signature, that both result from EEG activity from the temporal lobe, but result from two different protocols (e.g., auditory stimulus and auditory imagery, respectively), might not yield a successful authentication of the user. In this optic, the protocol selection module 112 aims to select a data acquisition protocol that is consistent with the protocols used during the creation of signatures, in similar conditions of sensor environment. For example, if a stored signature is available, that was generated by 2 EEG sensors targeting the temporal lobe of the brain in a protocol of passive auditory stimulus, and the user attempts to authenticate with the same environment of available channels, a similar protocol of auditory stimulus should be proposed to the user. If proposing the same protocol is not possible, a suitable replacement protocol is proposed that maximizes the information content of the data generated by the same biometric source. Using the same example, if a passive auditory stimulus cannot be achieved to identify neurophysiological markers in the temporal lobe's activity, an auditory imagery protocol may be proposed instead to also trigger activity in the temporal lobe (as opposed, for example, to a rest state protocol, that results in low activity in the temporal lobe). Moreover, existence of a signature resulting from a specific data acquisition protocol means the user is already aware of the experience given by that specific protocol, which simplifies the user's experience. Also, repetition of the same experience with the same protocol conditions increases the replicability of the biometric results, which is advantageous for authentication.

A predefined protocol condition related to a signature availability may be matching at least one NBI to a stored signature that were produced with the same combination of channels (i.e., number, modality, and biometric sources) to perform the authentication. It is possible that the ensemble of channels available for the NBI generation does not match any ensemble of channels that were used for the generation of stored user signatures. Of note, a match between two channels means that the two channels are taken from the same biometric source and carry the same modality (e.g., two EEG channels taken from the user's temporal lobe, even with different sensor and DAQ equipment). In such cases, one or more sub-ensembles of the channels available for NBI generation may match with at least one ensemble of channels that was used for the generation of user signatures. For example, 2 EEG channels from the temporal lobe and 1 EMG channel from the forearm are available for NBI generation, while signatures are only available for combinations of 2 EEG channels from the temporal lobe. In such case, the protocol selection module 112 prioritizes selecting a protocol that maximizes the information content of the sub-ensemble of channels that find a match in the existing signatures. In the example above, the protocol selection module 112 will select a protocol that leverages the 2 EEG channels. Then, the protocol selection module 112 may propose a second data acquisition protocol to the user to perform an enrolment phase where the information content of all available channels (or a majority of them, including at least one of the channels that were not optimized for NBI generation) is maximized, so that new signatures are created and stored.

A predefined protocol condition related to a user status may be a user's mental and/or physical status at the time of the authentication process. This may be advantageous for simplifying the user's experience and/or providing the user with a seamless authentication process. For example, if prior measurements made on EEG, fNIRs, or MEG modalities detect a high cognitive state (e.g., the user is working) or mental overload (e.g., stress), the protocol selection module 112 may not select a data acquisition protocol (i.e. a protocol) that requires the user to be in a rest state, which may be challenging to achieve. In another example, if no blinking activity is detected in an EOG or EEG modality (e.g., the user has their eyes closed), a protocol relying on visual information may not be selected. In another example, if important neurophysiological activity is detected (e.g., the user is mentally and/or physically active while performing a task that requires the user's focus), a best data acquisition protocol may be selected that does not require the user to voluntarily commit to the data acquisition protocol required for authentication. In another example, if neurophysiological content specific of mental fatigue is detected in EEG signals (e.g., high activity in the slow frequency bands of the EEG power spectrum), a data acquisition protocol based on muscle activity is preferred to a protocol based on mental activity and states.

As for the considerations of protocol-specific signature availability, the protocol selection module 112 may consider the user's mental and physical state when selecting a data acquisition protocol, so that it matches the user's state during the generation of signatures. For example, if a user had generated two signatures with a specific ensemble of biometric channels, including one signature in a relaxed mental state with an auditory stimulus protocol and one in a stressed state with a auditory imagery protocol, and the user attempts authentication with the same ensemble of biometric channels, and the user is in a stressed state (i.e., not in a relaxed mental state), the protocol selection module 112 may favor an auditory imagery protocol to match the mental state conditions of the stored signature. Maintaining consistency of a user's mental and physical states between signatures and NBIs strengthens the robustness of the authentication process across sessions. Advantageously, the identified user's mental and physical states may be stored in the memory along with the newly generated NBIs to enrich the user's profile of signatures (i.e. a collection of stored signatures associated to the user) in various user's mental and physical states.

A predefined protocol condition related to a user status may be a user ability. For example, if a user is hearing impaired, the protocol selection module 112 will not select a protocol that requires auditory stimuli and auditory commands.

A predefined protocol condition related to a user preference may take into account a preference of the user for a data acquisition protocol. For example, if a user dislikes authentication protocols that rely on imagery, such protocols will not be proposed to the user.

A predefined protocol condition related to an environment of the user may be the availability of user-system interaction devices, which may be identified from the communication Metadata produced by the communication sub-processor 116, for example. Besides the ensemble of available biometric sensors, the user is in an environment of devices 14 that provide means of user-system interaction. Those devices may transmit information to the user (e.g., a VR headset displays visual instructions to the user, or earbuds play auditory signals to the user) or receive information from the user (e.g., a microphone in smart glasses receives vocal commands from the user). The protocol selection module 112 only selects a protocol that is achievable based on the user-system interaction possibilities given by the Device Ensemble. For example, the protocol selection module 112 will not select a protocol that requires an auditory stimulus if no device in the user's environment may generate that auditory stimulus.

A predefined protocol condition related to an environment of the user may be the content of the physical environment of the user. The protocol selection module 112 tailors the protocol selection with respect to the user's environment at the time of the authentication process. The protocol selection module 112 may leverage measurements made on the user's environment to adapt the protocol selection. For example, if the user's environment is noisy, a protocol that relies on auditory stimuli will not be selected. In another example, if the user is identified to be in a distracting environment (e.g., based on lighting or noise measurements), a data acquisition protocol that requires the user to be in a rest state will not be selected.

A predefined protocol condition may as well relate to a use case. In this case, the protocol selection module 112 may adapt to the authentication use case. This may advantageously simplify the user's experience or provide the user with a seamless authentication process. For example, if authentication is required to happen multiple times over a short period of time (e.g., electronic signing of multiple documents), continuous streaming and authentication and/or a repeated protocol that does not require the user to voluntarily engage with the authentication system may be selected. Advantageously, the predefined protocol condition related to a use case may also be beneficial for security purposes. If authentication is required to access a highly-sensitive Protected Space (e.g., a sensitive financial transaction), a protocol may be selected that may be more challenging for the user to achieve, but that is known to maximize the information content of the biometric data 15.

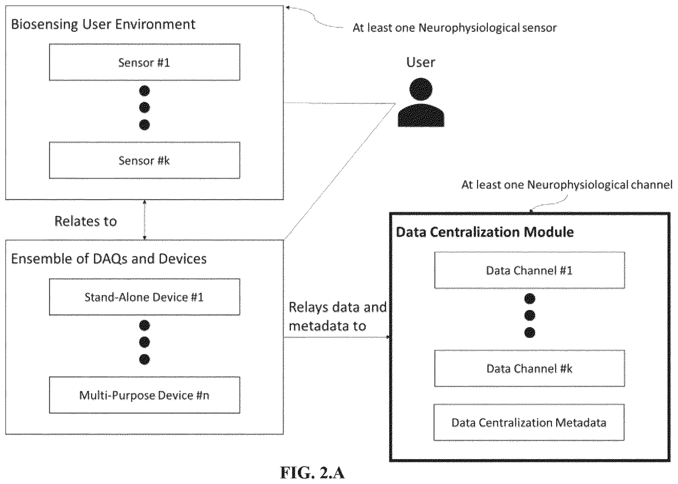

As illustrated in Figure 2A, advantageously, the biometric data may be captured from the user in a plurality of modalities (e.g. EEG, MEG, etc.) and from a plurality of biometric sources (e.g. using multiple sensors, devices), making the ensemble of available channels a rich depiction of the user's neurophysiological biometry, and possibly non-neurophysiological biometry. The key aims of the protocol selection sub-processor 112 include: adapting the authentication process and user experience to the user's current physical and authentication environment and maximizing the biometric information content of the biometric data 15 that is captured by each channel, depending on the modality and type of biometric source that are available. Maximizing that biometric information is key for generating NBIs that are highly user-specific, which is essential for user authentication. In this way, the protocol selection module 112 proposes an adaptative method that automatically selects a best data acquisition protocol, following which optimized neurophysiological data is captured in an approach consistent with the authentication process. The best data acquisition protocol is automatically chosen and/or synthetized (i.e., obtained) by the protocol selection module 112 based on an ensemble of weighted conditions at the time of the authentication. Therefore, the protocol selection module 112 adapts its choice to the state of the conditions of the time of the authentication, which is advantageous to make use of evolutive biosensing user environments 14b and other conditions (e.g., signature availability, availability of user-system communication components).

According to one or several embodiments, a condition score (i.e. weighted conditions) is associated to the at least one predefined protocol condition, and the data acquisition protocol to be used to collect the at least one first biometric data (i.e. the best data acquisition protocol) is selected based on the condition score.

Once the best data acquisition protocol is obtained, biometric data 15 may be collected from the user. The selected best data acquisition protocol may define:
- tasks to be achieved by the system (e.g., delivering a stimulus or giving instructions to the user),
- the type of tasks or activity instructed to the user (e.g., performing a muscle contraction),
- the onset and the duration of the best data acquisition protocol during which biometric data is captured.

While the best data acquisition protocol is applied, the biometric data 15 is captured by a sensor/device and received by the data centralization sub-processor 12 that transmits the biometric data 15 to the user recognition sub-processor 11 for the next authentication step.

According to one or several embodiments, at least one second biometric data different from the at least one first biometric data is received by the data centralization sub-processor 12. For example, the first biometric data may be an EEG signal and the second biometric data may be an EMG signal. In another example, it is possible to receive more than two biometric data: for instance, an EEG signal (comprising at least one channel), a PPG signal (comprising at least one channel), and an EMG signal (comprising at least one channel).

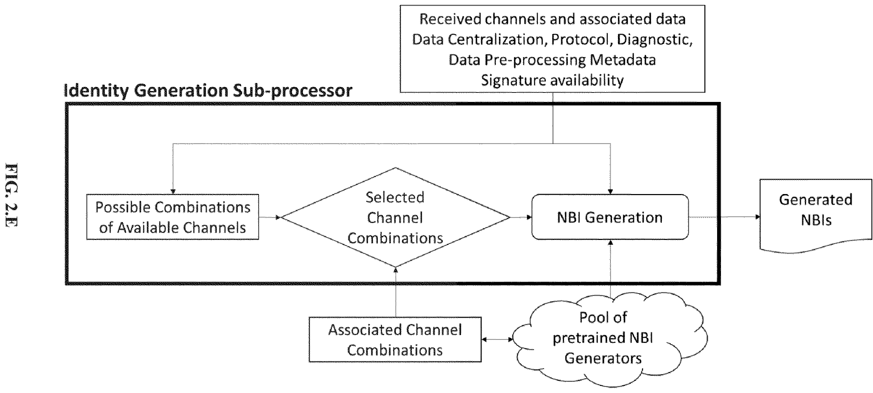

According to one embodiment illustrated in Figure 2E, the user recognition sub-processor further comprises the identity generation sub-processor 114 which is configured to generate at least one second NBI from the second biometric data using a second pretrained machine learning model being previously trained on subjects' data previously collected using a data channel associated to the second biometric data. In one example, at least 2 NBIs are generated: one different NBI per received biometric data.

The pretrained machine learning models may be deep learning architectures chosen to generate an NBI that encodes user-specific temporal, spatial, and/or spatiotemporal dependencies embedded in the biometric data.

Each of the pretrained machine learning models may be a Convolutional Neural Network (CNN), a Temporal Convolutional Network (TCN), a Recurrent Neural Network (RNN), a Long Short-Term Memory Network (LSTM), a Graph Convolutional Network (GCN), a Recurrent Graph Neural Network (RGNN), transformation models, self-attention mechanisms, encoders, a Convolutional Recurrent Neural Network (CRNN), a Generative Neural Network (GNN) or a combination of these models.

Any pretrained machine learning model used in the present invention may have been obtained using an optimizer such as Adam or SGD optimizers and loss functions such as binary or categorical cross-entropy loss, or focal loss, as examples of approaches of user classification and/or optimization of authentication-related metrics like True Acceptance Rate (TAR) and False Acceptance rate (FAR).

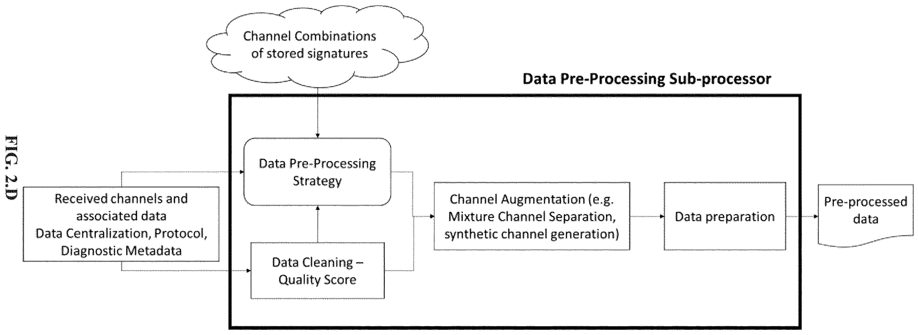

According to one embodiment illustrated in Figure 2D, generating a NBI further comprises selecting the first and/or the second biometric data based on a selection criterion to generate the NBI. For example, the selection criterion may be the availability of a stored signature for a specific combination of the available channels, a quality parameter stored in the Diagnostic and/or Data Pre-processing sub-processors (subsequently introduced), or conditions on the selected data acquisition protocol. According to one or several embodiments, the first and second biometric data may be used to generate a combined NBI using a third pretrained machine learning model, wherein the third pretrained machine learning model has been previously trained on user data previously collected using a data channel combination comprising the data channel associated to the first biometric data and the data channel associated to the second biometric data. For example, the first and second biometric data may be one EEG signal and one EMG signal originating from specific locations (i.e., biometric sources). The third ML model may be previously trained on data collected using said one EEG channel and said one EMG channel. Thus, the combined NBI may include information from both the EEG and EMG signals.

The pretrained machine learning models (e.g. the first, second and third) architectures may be selected based on: a biometric data type (e.g. image, recording), a biometric data source (e.g. optical sensor, electrical sensor), a biometric data channel type (e.g. EEG channel, ECG channel), or on a combination of the previously mentioned options. For instance, a "single-channel" NBI generator may be trained for various input channels like EEG, EOG, ECG, and EMG, considering typical DAQs integrated in common devices. This allows for the availability of a population of pretrained NBI generators, each extracting temporal dependencies from one channel, ensuring at least one NBI is generated for authentication if any neurophysiological channel is available. In another example, a multi-task learning architecture may be used to handle multiple channel combinations simultaneously, reducing model complexity and enhancing adaptability to diverse scenarios.

Indeed, the possibility of generating several NBIs increases the chances of finding at least one NBI-signature match to authenticate the user to access a protected space. Generating several NBIs may be achieved through multiple combinations of channels which enhances adaptability allowing the authentication system to work seamlessly across various biosensing environments and devices. This flexibility avoids device-specific limitations and ensures robust performance even if available biometric channels are discarded. Furthermore, intersecting overlapping biosensing environments facilitates reuse of user-specific knowledge across different setups. For example, an NBI Generator may use multi-task learning architectures to handle multiple input channel combinations, and may be trained simultaneously on different tasks. This may reduce the number of models needed. Information about the available pretrained NBI Generators and their corresponding input combination of channels may be stored in the Identity Generation Metadata.

Advantageously, NBIs generated from different biometric channels provide complementary user-specific information, enhancing authentication reliability. This offers the authentication system the possibility to choose an NBI that ensures higher accuracy in the authentication process even with varying data quality.

Advantageously, a combined NBI may comprise neurophysiological markers (i.e., the temporal dependencies) from the multiple biometric sources from which the biometric data originates, increasing the user-specificity of the NBI. Moreover, a combined NBI may extract inter-channel dependencies (i.e., the spatial dependencies), which reflect the physiological inter-related temporal patterns from different neurophysiological sources, increasing, as well, the user-specificity of the NBI.

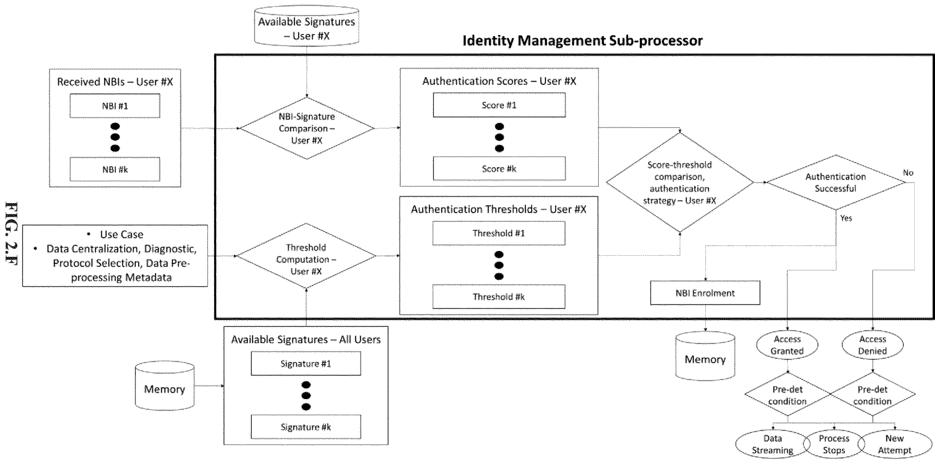

As already stated above in the description, the user recognition sub-processor further comprises an identity management sub-processor 115 configured to receive one or more NBIs, as well as the Metadata synthetized during the previous steps of the authentication process, and to compare at least one of these received NBIs to at least one available signature to generate an authentication result. The functionalities of the identity management sub-processor 115 will be described in detail in the following paragraphs. Figure 2F provides an illustrative embodiment of the identity management sub-processor 115.

According to one or several embodiments, a score (i.e., the authentication score) is associated to at least one of the first, second and combined NBIs by comparison of at least one of these NBIs to at least one corresponding signature (e.g., generating with a same NBI generator for the same combination of channels) stored in the user's profile. When multiple signatures are available in the user's profile for an NBI, the NBI may be compared to one, more than one, or a combination (e.g., a weighted average) of the available corresponding signatures.

For example, the score may be a distance (e.g. Euclidian, Manhattan, Cosine, or Mahalanobis distance, or the correlation coefficient, or a combination of these metrics and others leveraging ensemble methods), or the result of other approaches like template matching methods developed on pretrained machine learning methods. This score may be interpreted as a degree of similarity between NBI and corresponding signatures and is produced to be compared to an authentication threshold and may also be used to determine the order of using the different NBIs for authentication. In another example, the score may be used to choose which NBI(s) to use for authentication and which NBI(s) to disregard.

According to one or several embodiments, the identity management sub-processor 115 is configured to compare the output authentication score, that is associated with an NBI-signature pair, to an authentication threshold that is set according to at least one of: a quality parameter, a user preference, a signature availability, a biometric data parameter, a user status, an environment of the user, a use case, or other conditions. For example, if an authentication score is above a corresponding authentication threshold, the user is authenticated (i.e., the authentication result). The authentication threshold may be different depending on which criterion it relates to. For example, a weight may be associated to the quality parameter received from the Diagnostic/Data Preprocessing Metadata and that weight may be higher in the calculation of the threshold than a weight of a parameter related to the environment of the user, if the quality parameter is considered in this case more important than the environment of the user. A parameter related to the environment of the user may be the use case or the physical environment of the user.

The authentication threshold may also be user-specific so that it maximizes the separation between a genuine score and an impostor score associated to the type of NBI under consideration. A genuine score may be a distance between at least two signatures of the user, whereas an impostor score may be a distance between at least one signature of the user and one signature from another subject different from the user.

The authentication threshold may also be tuned to reach an authentication objective (e.g., reaching a pre-determined balance between rates of true positives and false positives), that can be quantified with authentication metrics like True Acceptance Rate (TAR) and/or False Acceptance Rate (FAR) with tools like receiver operating characteristic (ROC) curves.

The authentication threshold may be dynamic. In other words, the value of the threshold may be adapted during the authentication process.

In one example, the authentication threshold is tuned to a rate at which the user is usually successfully authenticated with a specific channels combination. In another example, the authentication threshold is tuned to the success of a third diagnostic process performed by the data diagnostic module 111 and stored in the Diagnostic Metadata.

In one example, the authentication threshold is tuned to be adapted to the use case for which authentication is required. Based on pre-determined levels, some use cases are determined to be more sensitive than others (e.g., accessing a ledger versus a fidelity program). The selectivity of the authentication threshold may be increased for sensitive use cases. In some situations of high sensitivity, extremely low FAR may be required (e.g., one every million) even though the TAR is low and necessitates multiple authentication attempts (e.g., one success every three attempts). In some other situations, that are less sensitive and require repeated authentications, FAR may be increased as a compromise to ensure high TAR, which improves the user's experience. In this optic, the EER (Equal Error Rate) may be a metric of choice.

In another example, the authentication threshold is tuned with respect to the modality and/or biometric sources carried in the NBI by an available combination of channels. Some neurophysiological modalities (e.g., EMG, EEG) may be identified to carry a larger amount of user-specific markers than other modalities (e.g., PPG). As a result, the user-specificity of the NBI may be related to the type of input biometric data, and the selectivity of the threshold may be tuned accordingly. In a similar example, the threshold may be adjusted if the NBI is a combined NBI that was generated from at least two channels of different modalities and/or biometric sources.

In another example, the authentication threshold is tuned with respect to the best selected data acquisition protocol that was performed.

In another example, the authentication threshold is tuned to the number of stored signatures. If for a specific channel combination, a large number of signatures is available, the selectivity of the authentication threshold may be increased. In one example, selectivity is linearly increased with the number of stored signatures.

Once the authentication score and the authentication threshold are computed for an NBI-signature pair, the authentication score and the authentication threshold values are compared. The output of this comparison (i.e., the authentication result) may be of any kind, as long as the authentication process can interpret this result to decide to what extent the user is authenticated. The approach may be a binary (i.e. 1/0) approach, where the user is authenticated if the computed score is higher than the corresponding threshold. Another approach may rely on the ratio between the authentication score and the authentication threshold. A ratio below 1 would authenticate the user. The advantage of this method relies on the fact that it also informs to what extent of confidence the user was authenticated (e.g., whether the authentication was marginally successful or highly confident). This ratio may be related to a probability of the user being authentic. This probability, if successful but too low, may trigger the need for multi-factor authentication, or may only grant access to a limited range of the protected space. Advantageously, this probability may be mathematically combined with the TAR or FAR values related to the selected authentication threshold.

According to one or several embodiments, the authentication result is accompanied by an authentication probability. For example, the authentication probability may be leveraged by the device managing the protected space to give access to all or parts of the protected space, based on the level of the authentication probability.

According to one or several embodiments, the identity management sub-processor 115 uses several NBIs to perform a multi-factor authentication. For example, after the user is successfully authenticated with one NBI (e.g., the authentication score surpasses the authentication threshold for that NBI), the identity management sub-processor 115 proceeds to a second authentication step with another NBI. This approach may be used for high-security purposes for sensitive use cases. Successful multi-factor authentication may be defined by the number of successful "NBI to signature" comparisons, in which case NBIs may be tested until at least the number of required successful NBIs is obtained. The order in which the NBIs are tested may be randomized or based on a pre-determined condition.

According to one or several embodiments, the identity management sub-processor 115 may compare "NBI-signature" pairs (at least one NBI to at least one user signature) sequentially until at least one "NBI-signature pair" is successfully compared (i.e. the authentication result is positive, in other words the authentication result allow to access a protected space). In this case, the identity generation sub-processor 114 and the identity management sub-processor 115 may communicate to only generate a new NBI if the latest generated NBI did not allow the user to access a protected space. Advantageously, this reduces computational time if the user is authenticated with the first generated NBI.

According to one or several embodiments, all "NBI-signature" pairs are tested at once, and if at least one pair authenticates the user (i.e. allow the user to access a protected space), the user accesses the protected space independently of other pairs.

According to one or several embodiments, all "NBI-signature" pairs are tested and an authentication result, comprising information about all the tests of "NBI-signature" pairs, is outputted. This may be achieved, for example, with score level fusion and decision fusion techniques (e.g., average number of successful "NBI-signature" pairs, sum rule, product rule, majority voting).

According to one or several embodiments, the identity management sub-processor 115 may calculate a group NBI (i.e. association of multiple NBIs) associated to the first NBI and second NBI. For example, calculating the group NBI may be done using weighted averaging, feature fusion, or a machine learning method and compared to a group signature processed with the same method.

Other authentication strategies (i.e., the conditions taken to generate an authentication result from at least one available score-threshold comparison, such as the multi-factor or sequential strategies mentioned previously) may be considered to generate an authentication result from the comparison of the authentication scores and authentication thresholds.

Based on pre-determined conditions, NBI-signature successful comparison may yield a successful authentication result. Based on another pre-determined condition, e.g., successful authentication, the one or more NBIs may be stored as new signatures for the user, and for the availability of these news signatures, they may be stored in the Identity Management Metadata. If the authentication is successful, a success notification comprising a "positive" authentication result may be sent to the devices that monitor the Protected space, which grants the user access to the Protected Space.

Conversely, if the authentication fails (i.e. negative authentication result) and/or, at any stage of the process, a requirement is not met, new NBI-based authentication attempts may be proposed, other BI-based authentication methods may be attempted, authentication methods based on user external credentials may be proposed, or the authentication process may stop, based on a pre-determined condition.

According to one or several embodiments, after a successful authentication and based on a pre-determined condition, continuous data streaming may be achieved to maintain access to the Protected Space.

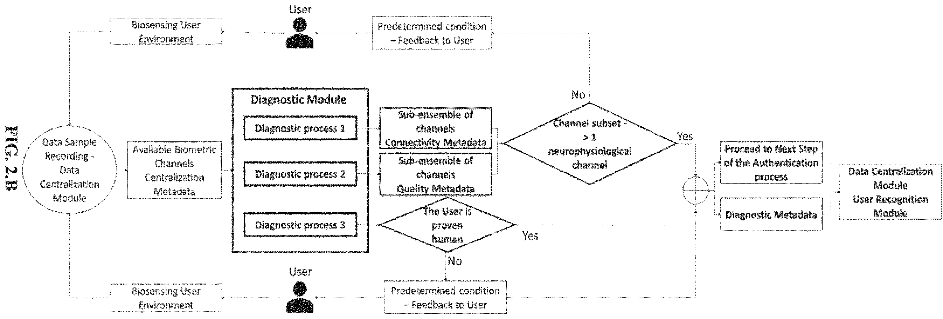

The system 1 may optionally comprise a data diagnostic sub-processor 111 (i.e. data diagnostic module) configured to perform at least one of: a first diagnostic process, a second diagnostic process, or a third diagnostic process, as illustrated in Figure 2B.

The first diagnostic may, for example, check that:
- at least one neurophysiological channel is received by the data centralization sub-processor 12, which is necessary for the creation of an NBI;
- the data centralization sub-processor 12 can successfully communicate with a sensor within a device (s) to successfully start, monitor, or stop a biometric data acquisition;
- the channel(s) received by the data centralization sub-processor 12 contains data and are not void;
- the data centralization sub-processor 12 receives the biometric data with sufficient and continuous network activity, permitting near-real-time transmission of data without pack loss or lag, for example;
- the necessary data centralization Metadata (i.e. centralization Metadata) accompanying each channel is available and transmitted (e.g., sampling rate must be known by the user recognition sub-processor 11);
- the battery status of a device, hardware, or medium is sufficient to sustain the authentication process.

From these checks, the first diagnostic process outputs information related to the first diagnostic such as a sub-ensemble of channels, from the original ensemble of channels received by the data centralization sub-processor 12, based on their capacity to fulfil necessary conditions on biometric data transfer. Therefore, some channels may be discarded for future use after the first diagnostic process. For example, if a sensor and associated device are identified to have connectivity issues, such as a significant lag that is detrimental to the user's experience, or significant packet loss that is detrimental to the generation of a reliable NBI, the channel will not be retained for the next immediate authentication process. Metadata related to connectivity parameters and associated with the retained channels are part of the diagnostic Metadata that is sent to the other pertinent sub-processors for the authentication process.

The second diagnostic process may be performed once a biometric data 15 is already collected/recorded. The chunks of the collected biometric data may be used by the second diagnostic process.

In the second diagnostic process, a quality parameter associated to each channel may be calculated. Such a quality parameter may be obtained for example from:
- assessing whether a biometric data comprises a neurophysiological signal, which allows to detect an issue with a sensor used to collect neurophysiological signal;
- calculating a signal strength (e.g., average or maximal amplitude of a data signal) to ensure that the collected data signal possesses sufficient reliable information and is not obscured in noise;
- calculating a signal to noise (SNR) ratio for a biometric data to be able to separate background noise from information content of the biometric data;
- analyzing bandwidth and frequency content of a biometric data signal to ensure that the biometric data carries information for a full bandwidth typical of a modality (for example, the frequency spectrum of an EEG channel should have frequency information in the 1-50Hz bandwidth);
- analyzing temporal and frequency characteristics of a biometric data signal and its correlation with external events (for example, a fingerprint recognition should be followed by EEG activity in the beta band "13-30Hz" related to motor control; in another example, an iris scan should be followed by blinking activity "0-10Hz bandwidth");
- analyzing data signal stability to avoid loss of useful information in the collected signal;
- analyzing repeatability between chunks in case a biometric data is collected by chunks which gives an understanding of the expected generalization of the quality of the authentication process;
- analyzing cross-correlation or coherence between channels to confirm high signal quality;
- detecting a baseline drift in the biometric data to avoid signal obscuration.

Consequently, the second diagnostic process may output a second group of channels with corresponding quality parameters. The second group of channels may comprise only the channels that passed a quality test based on the quality parameter(s) calculated in the second diagnostic process. The calculation of the quality parameter and of the threshold necessary to perform the quality test (i.e. quality threshold) may depend on the modality of biometric data associated with each channel, and on centralization Metadata of that channel. The quality threshold may also be determined based on a security level required for a particular use case. The quality parameter(s) is/are stored in the memory as quality Metadata and may be comprised in the diagnostic Metadata that is sent to some sub-processors (e.g. protocol selection sub-processor 112, user-system communication sub-processor 116) for authentication purposes.

The third diagnostic process may comprise verifying that the user is a human user by identifying the presence of a human signal in least the first biometric data.

Said third diagnostic process may comprise performing a neurophysiological-based CAPTCHA (Completely Automated Public Turing test to tell Computers and Humans Apart). Examples of neurophysiological-based CAPTCHA tests may be following:
- detection of eyeblink patterns in an EOG signal with standard template matching;
- assessing the frequency bandwidth typical of a modality (e.g., EEG signals) with template frequency spectrums (e.g., template activity in the 13-30 Hz beta band);
- determining a periodicity in the 50-150 Hz range in an ECG modality, for heart rate;
- a biological signature specific of EMG signals, like motor unit action potentials, may be detected in EMG modalities. For this test, machine learning techniques for pattern recognition may also be leveraged to identify whether a signal is a neurophysiological signal from a human biometric source, or not. In this optic, support vector machines and random forest algorithms may be used.

If the user is verified to be a human user, the neurophysiological-based CAPTCHA is achieved. If the neurophysiological-based CAPTCHA is not achieved, supplementary conditions will be applied. These supplementary conditions may be pre-determined by the authentication system 1, depending on factors of the user's environment or decided by the user. In one or several embodiments, the neurophysiological-based CAPTCHA is repeated with a new biometric data sample for a certain number of iterations. If the user is still not identified as a human (i.e. negative output of the third diagnostic process), another non-neurophysiological-based CAPTCHA may be proposed to the user (e.g., CAPTCHA based on non-neurophysiological biometric data, or a manual CAPTCHA). If the output is still negative, the authentication process may stop, as the system may recognize a bot rather than a human, or the system may proceed to the next authentication step by overlooking that the user was not proven to be human but while raising a warning. In case of a raised warning, an unsuccessful CAPTCHA (i.e. negative output of the third diagnostic process) is kept in memory during the authentication process and may be used to tune the authentication threshold.

Finally, in case the authentication process is not stopped during the first/third diagnostic process for instance, the data diagnostic sub-processor 111 may output diagnostic Metadata to the data centralization sub-processor 12, the diagnostic Metadata comprising a sub-ensemble of channels, that is the intersection of the sub-ensemble of channels output by the first and second diagnostic processes, to be used in the following steps of the authentication process.

The authentication system 1 may optionally comprise a data preprocessing sub-processor 113. The data preprocessing sub-processor 113 may receive biometric data 15, centralization Metadata, protocol Metadata and/or information about channel combination for available NBI generators and stored signatures stored in the Identity Generation and the Management metadata respectively. The data preprocessing sub-processor 113 may be adapted to perform data preparation, that may encompass data processing steps to transform the raw data received by the data centralization sub-processor (or module) 12 into processed data that may be adequately input to the available pretrained NBI Generators. To perform data preparation, the data preprocessing sub-processor 12 may standardize biometric data (e.g., signal normalization, signal segmentation, signal augmentation in the temporal domain), clean biometric data (e.g. remove unwanted artifacts, filtering), extract information (like temporal and/or frequency features) from biometric data or even separate biometric data into different sub-groups of data and/or modalities (e.g., separation of modalities from a mixture signal using source-separation methods, like extraction of EEG-like and EOG-like modalities from a mixture bioelectric signal recorded with a neurophysiological sensor from the user's front, or time-frequency separation of the signals, like wavelet decomposition). In one embodiment, each new sub-group of data hence generated is associated to a particular data channel. In another embodiment, the data preprocessing sub-processor 113 is configured to decompose biometric data (e.g. first biometric data, second biometric data) in the spatial domain and/or temporal domain. According to one or several embodiments, the data preprocessing sub-processor 113 is configured to generate an artificial channel (i.e. synthetic channel augmentation) from at least the data channel associated to the first biometric data and/or the data channel associated to the second biometric data. In this case, the artificial channel may be generated using a machine learning approach such as a generative adversarial network (GAN), an autoregressive model, a sequence-to-sequence model, or a conditional variational autoencoder. For example, synthetic channel augmentation and biometric data separation approaches may follow a strategy that increases the number of possible channel combinations for which signatures are stored in the user's profile, for the advantages previously mentioned regarding.

According to various configurations, the data preprocessing sub-processor 113 is adapted to execute only part or all of the above functions, in any possible combination, in any suitable manner.

The authentication system 1 may optionally comprise a (user-system) communication sub-processor 116 (i.e. user-system communication module) configured to receive the authentication result and/or Data Centralization metadata and/or protocol metadata, and generate and output communication Metadata, the communication Metadata comprising at least one of the following:
- a notification for the user about an authentication status;
- an instruction for the at least one device to access the protected space managed by the at least one device;
- an instruction for the user to interact with at least the at least one device (e.g., during the application of the acquisition protocol).

In one embodiment, the communication sub-processor 116 is configured to generate and output communication Metadata based on the protocol Metadata.

For example, the notification for the user about an authentication status may be a visual notification or an auditory notification. The notification for the user may comprise an indication of successful or unsuccessful authentication.

The instruction for the user to interact with at least the at least one device may be for example an instruction to clean the device (or a sensor associated to the device) to enhance the data acquisition quality, an instruction to replace a sensor (e.g. the sensor may be a part or in association with a wearable device), an instruction to handle a device (e.g. turn on/off, restart, reset).

A further biometric data may refer to any additional biometric data received in addition to the first biometric data and the second biometric data. All what applies on the first biometric data applies as well on the other biometric data (i.e. second biometric data and further biometric data) and vice versa.

Metadata (e.g. centralization Metadata, protocol Metadata), biometric data (e.g. first biometric data, second biometric data, further biometric data), as well as ML (machine learning) parameters relative to the ML models used in the present disclosure may be stored in one or more local or remote database(s). The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk). In advantageous embodiments, the ML parameters may have been previously generated by a system for training. Alternatively, the ML parameters may be received from a communication network.

It may be observed that the operations by the sub-processors (11, 12, 111, 112, 113, 114, 115, 116) are not necessarily successive in time, and may overlap, proceed in parallel or alternate, in any appropriate manner. For example, new biometric data may be progressively received over time and preprocessed, while the user recognition module 11 is dealing with the previously received biometric data 15. In alternative examples, a batch of biometric data corresponding to a complete time sequence range may be fully received and processed in a specific timely manner. In alternative, data may be streamed continuously by the DAQs and the Data Centralization module and the authentication process being completed in real-time.

The device 1 is interacting with a user interface 17, via which information can be entered and retrieved by a user 16. The user interface 17 includes any means appropriate for entering or retrieving data, information or instructions, notably visual, tactile and/or audio capacities that can encompass any or several of the following means as well known by a person skilled in the art such as a screen, a keyboard, a trackball, a touchpad, a touchscreen, a loudspeaker, a voice recognition system.
In its automatic actions, the system 1 may for example execute the following method for securely authenticating a user to access a protected space managed by at least one device:
- transmitting the centralization Metadata;
- outputting the protocol Metadata comprising at least an information concerning a data acquisition protocol to be used to collect the at least one first biometric data;
- collecting the at least one first biometric data following said data acquisition protocol;
- generating the at least one first NBI;
- comparing the at least one first NBI to at least one user signature stored in a memory and output an authentication result; and/or saving the at least one first NBI as at least one new user signature in the memory;
- transmitting the recognition Metadata to the at least one device to securely authenticate the user to access the protected space.

The system 1 may be embedded in a particular apparatus. Such a particular apparatus may be for example a workstation, a laptop, a tablet, a smartphone, a head-mounted display (HMD) such as an augmented/virtual reality headset, an earbud/earphone, a headband, smartglasses, or a combination of such apparatus. The apparatus may include at least one a multi-purpose device (i.e., that is equipped with sensor(s) for recording/collecting biometric data) and/or may include a device configured to provide access to a protected space and/or deliver/send a signal to the user.

In addition, the system 1 may be implemented differently than a standalone software, and an apparatus or set of apparatus comprising only parts of the previously mentioned particular apparatus may be exploited through an API call or via a cloud interface.

### EXAMPLES

The present invention is further illustrated by the following examples.

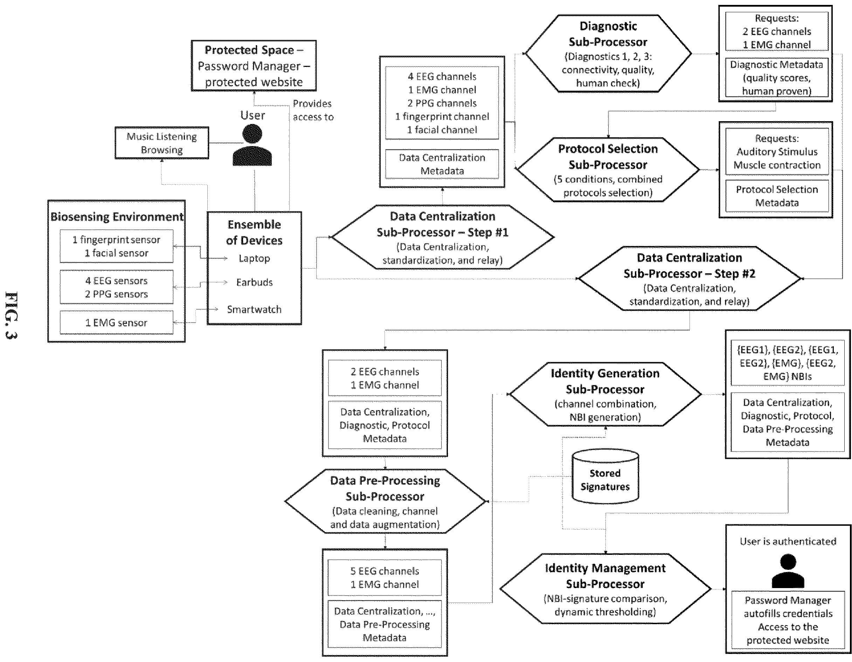

### Example 1: Neurophysiological biometric authentication system in association with a password manager (Figure 3)

The present example relates to a user who is in their office working on their laptop. The user wishes to log in to a website that requires a username and a password. To do so, the user will use their password manager to autofill these credentials. In this scenario, the protected space is the password manager, and the device granting access to the protected space is the laptop. In this case, the password manager is monitored with the Neuro ID technology (i.e. neurophysiological biometric authentication system 1 of the present invention). The user must successfully authenticate with the (neurophysiological biometric) authentication system 1 to successfully use the password manager. The log in webpage prompts action from the password manager, that in turn requests the onset of an authentication process via the authentication system 1.

In this example, the authentication process (i.e., Neuro ID software) is installed on the user's laptop and linked to the password manager, which is here a plugin in a web browser. Any computation of raw and transformed data is performed locally in a Trusted Execution Environment (TEE) of the laptop. The user signatures are stored in a separate protected storage enclave in the laptop. Communication and data transfer and retrieval between enclaves with multi-purpose devices (e.g. earbuds and smartwatch) are achieved through secure communication protocols and adequate data encryption (e.g., TLS channels and HTTPS protocols) and key management practices.

In this example, the user is listening to music being streamed by the laptop with earbuds and wears a smartwatch around the wrist. The ensemble of devices in the user's physical environment is therefore composed of a laptop, a pair of earbuds, and a smartwatch. The user is in a biosensing user environment composed of three multi-purpose devices:
- the pair of earbuds integrate four EEG sensors and two PPG sensors in total (two EEG and one PPG sensors on each side). The EEG sensors are metal microelectrodes embedded in the flexible tip of the earbud in snug contact with the intra-ear cavity, while the PPG sensors are embedded in the casing of the earbud in contact with the cavum of the ear
- the smartwatch integrates in its wristband one EMG sensor as a polymer conductive material in contact with the wrist flexor muscles
- the laptop integrates a camera and a fingerprint scanner

The biosensing user environment is composed of four EEG sensors, one EMG sensor, two PPG sensors, and two non-neurophysiological biometric sensors, integrated into three multi-purpose devices, each of which integrates a dedicated DAQ. The DAQ of the smartwatch, for example, transforms the analog bioelectric activity of the forearm muscle into a digital datastream of the EMG modality (sampling frequency 1024Hz, pass-band filtering in the range 50-500Hz, muscles as the biometric source, transferred in the JSON format). The DAQ of the earbuds transforms the analog bioelectric activity of the temporal lobes into digital datastreams of the EEG modality (e.g., sampling frequency 128Hz, pass-band filtering in the range 1-50Hz, temporal compartment of the brain as the biometric source, transferred in the XML format).

Data centralization sub-processor (also illustrated in its general architecture in Figure 2.A): the data centralization sub-processor continuously searches for DAQs or multi-purpose devices to synchronize with. In this scenario, the data centralization sub-processor synchronizes with the DAQs of the smartwatch, the earbuds, and the laptop and requests their related Metadata, which is centralized in the data centralization sub-processor. The data centralization sub-processor interprets that Metadata and notably concludes on the modalities of biometric data that may be measured and transferred by the available DAQs, as well as the source biometric sources, and recording conditions. In this example, the data centralization sub-processor centralizes 9 biometric channels from sensors and DAQs integrated in a laptop (1 fingerprint channel, 1 facial channel), earbuds (4 EEG channels, 2 PPG channels), and one smartwatch (1 EMG channel). The data centralization sub-processor 12 centralizes this biometric information into a centralization Metadata, as well as other types of information, for example about connectivity and battery status. As multi-purpose devices (i.e., Device Ensemble) are identified to be available for recording neurophysiological data necessary for the (Neuro ID) authentication process, the process of monitoring the password manager with the neurophysiological biometric authentication system 1 (i.e., Neuro ID solution) is granted.

The data centralization sub-processor 12 is configured to standardize and synchronize the incoming datastreams and to send standardized channels to the user recognition sub-processor. For example, any incoming EEG, PPG, and EMG datastream is timestamped and resampled at 128, 128, and 512 Hz, respectively, and the resulting data is stored in JSON structures, that is transmitted via the centralized neurophysiological channels in packets of one second.

The centralization and standardization tasks of the data centralization sub-processor makes the authentication system 1 and associated method adaptable to the user's biosensing environment, which may change across time (e.g., presence or absence of the smartwatch, presence of multiple devices from different manufacturers with specific recording and communication methods, etc). The data centralization sub-processor 12 makes it possible to perform authentication from a plurality of biometric sources (here, the temporal brain compartment, masseter and other facial muscles, eye movements, facial arteries, wrist muscles, facial image, and fingerprint), which strengthens the complexity and the unicity of the generated composite and multimodal NBIs.

Diagnostic sub-processor (also illustrated in its general architecture in Figure 2.B): The password manager automatically identifies the necessity of auto-filling a password and prompts the authentication process, which starts with a short diagnostic process carried out by the data diagnostic sub-processor 111. A sample (e.g., 300 ms) of neurophysiological data is captured by the DAQs and transmitted to the data centralization sub-processor. The latter standardizes the sample of data and relays it to the diagnostic sub-processor through the seven available neurophysiological channels. The centralization Metadata is also transmitted to the diagnostic sub-processor. Advantageously, the user is browsing and listening to music, which implies brain and muscle activity necessary for the diagnostic process.

The first diagnostic process is run and allows identifying that the battery of the laptop is low, while the laptop is necessary to grant access to the protected space. The first diagnostic therefore may request not to use the sensors integrated into the laptop (i.e., fingerprint scan and camera) to save battery. The first diagnostic may also identify that data transfer with the 2 EEG sensors of the left earbud is not possible, potentially due to a faulty hardware, disconnected sensors, or a faulty communication system. For the rest of the example, let's assume that the five other channels pass the first diagnostic process.

The second diagnostic process uses the results from the first diagnostic process and only assesses data quality for the five channels that passed the first diagnostic (i.e., 2 EEG channels, 2 PPG channels, and 1 EMG channel). Let's here assume that only the 2 EEG and the 1 EMG channels pass the quality thresholds. Of note, the quality thresholds were set in this scenario to only accept channels for which datastreams demonstrated high signal-to-noise ratios (with respect to a predetermined metric) and information in the full bandwidths of relevance, based on the consideration that the user attempts to access a password manager, which is a highly sensitive protected space, and that only 5 channels were available. In this example, the second diagnostic process identifies that the PPG signals are of very low amplitude, potentially because the sensors are not placed in a location that is in contact with the user's specific anatomy, and do not pass the quality threshold.

The third diagnostic process identifies motor unit action potentials in the EMG data, among other physiological signatures identified in the other received channels, so that the user is identified as human.

Finally, the diagnostic sub-processor intersects the sub-ensemble of channels and outputs a new sub-ensemble of 2 EEG channels and 1 EMG channel, as well as Diagnostic Metadata (comprising for example information about connectivity and battery status). As the sub-ensemble of channels includes at least one neurophysiological channel, and the user was identified to be a human, the user proceeds to the next steps performed by the authentication system 1 and no feedback is sent to the user, who could be fully unaware of the diagnostic processes. The Diagnostic Metadata is sent to the other modules of the user recognition sub-processor 11 and to the data centralization sub-processor 12. The next authentication steps will rely on recordings from the 2 EEG channels and the 1 EMG channel that were extracted by the diagnostic sub-processor.

The diagnostic sub-processor makes the authentication system 1 and associated method adaptable to the quality of the biometric data being measured from the user's body, ensuring that high enough signal quality is obtained for the generation of reliable NBIs, and adds a layer of security to repel bots.

Protocol selection sub-processor (also illustrated in its general architecture in Figure 2.C): the protocol selection sub-processor receives the centralization Metadata and the diagnostic Metadata. From these Metadata, the protocol selection sub-processor identifies a data acquisition protocol that best fulfills a list of predefined protocol conditions. The data acquisition protocol is chosen within a set of data acquisition protocols, each of which is scored according to the list of predefined protocol conditions.

To maximize the information content of the selected 2 EEG channels and of the 1 EMG channels received from the data centralization sub-processor, the protocol selection sub-processor aims to trigger activity in the temporal lobes of the brain (e.g., auditory stimulus) and in the forearm muscles (e.g., voluntary contraction). Temporal EEG and forearm EMG are not competing channels (i.e., the activity of one channel is not detrimental to another channel) and all three channels received quality scores that passed the quality threshold set by the diagnostic sub-processor. Moreover, both temporal EEG and forearm EMG provide biometric information that is highly user specific. Therefore, the protocol selection sub-processor does not aim to favor triggering activity from a specific channel over the two others. It is identified that the user already has user signatures stored for EMG activity from the muscles of the forearm related to voluntary fist opening and closing and for EEG activity from the temporal lobes resulting from a protocol of external auditory stimulus and another of auditory imagery. Based on diagnostic EEG, it is identified also that the user is in a state of high cognitive activity, which is consistent with the mental's state in which signatures resulting from external auditory stimulus and auditory imagery were generated and stored.

The user-system communication sub-processor indicates the presence of a speaker and a microphone in the earbuds, a motion sensor in the smartwatch, and a screen display and a speaker in the laptop.

The user had indicated as well, during a previous phase of user registration to the neurophysiological biometric system 1, for example via the laptop (used as user interface), that they prefer protocols without instructions for mental imagery, such as auditory imagery. Moreover, it is detected that the user is in a distracting environment (high EEG activity related to focus was detected in the Diagnostic EEG), making it challenging for the user to mentally focus on auditory imagery.

Based on this information, the protocol selection sub-processor 115 selects the best-fitting protocol, following in this example a hierarchal approach. First, all the protocols that do not meet some necessary predefined conditions are automatically discarded (e.g., protocols requiring a haptic stimulus and the presence of a vibration motor, protocols in rest state which require a calm environment, protocols relying on modalities other than EEG and EMG, etc.). Then, the protocol selection sub-processor 115 is configured to favor protocols that the user has already practiced and for which signatures are available. Then, the protocol selection sub-processor 115 is configured to favor protocols that maximize neurophysiological information, taking into account the quality parameters stored in the diagnostic metadata Finally, if multiple protocols are still available, the user's preferences and conditions on the user's environment and mental state are considered.

In this example, the following protocol is automatically selected, stored in protocol Metadata, and sent to the data centralization sub-processor 12 and user-system communication sub-processor 11. Once the protocol starts, the earbuds stop streaming music. After a certain amount of time necessary for the brain activity to adapt to music stopping, the speaker emits two auditory stimuli (e.g., bips) with one second interval. The auditory stimuli trigger specific activity in the user's temporal lobe, captured as auditory ERP data in 2 EEG channels, and act as a command to the user who is tasked to achieve muscle contraction to perform a wrist flexion-extension, captured in 1 EMG channel. In total, the protocol lasts around three seconds during which biometric data 15 is captured by the user's biosensing environment and DAQs and is centralized by the data centralization sub-processor 12.

The protocol selection sub-processor 115 makes the authentication system 1, and associated method, adaptable to the user's biosensing and physical environment for the generation of user-specific NBIs by leveraging the maximum available biometric information from the user in the limiting context of their past authentication history and their current activity.

Data preprocessing sub-processor (also illustrated in its general architecture in Figure 2.D): the data preprocessing sub-processor prepares the biometric data that is transmitted by the data centralization sub-processor after the application of the best protocol for the future generation of the NBI from that pre-processed data. Besides the datastreams, the data preprocessing sub-processor receives as input the centralization Metadata, the diagnostic Metadata, the protocol Metadata, and information about the NBIs already stored in the user's profile.

As the available two EEG and the one EMG channels were already pre-processed by the related DAQs to output EEG and EMG modalities only (no mixture modalities), the data preprocessing sub-processor do not proceed to channel augmentation by datastream separation.

As detailed in the description, the data preprocessing sub-processor may be configured to perform data cleaning, with a method specific to each modality and adapted to any other information made available by the metadata. In the present example, the EEG datastreams are filtered in the 5-30Hz frequency band, that is the band of highest relevance for temporal activity resulting from an external auditory stimulus.

Eye movement artifacts are removed with ICA (Independent Component Analysis). The EMG datastream is cleaned following the same modality-specific approach. The data quality score is produced for each pre-processed channel.

Then, the data preprocessing sub-processor recognizes that NBI Generators and stored signatures are available for some specific combinations of the available channels (i.e., {1 EEG from the temporal lobe, 1 EMG from the forearm flexor muscles}), although other channel combinations involving one EEG channel from the motor cortex, if available, may also match other available NBI generators and stored user signatures (e.g., {1 EEG from the motor cortex, 1 EMG from the forearm flexor muscles}). To strategically match as many channels' combination as possible for which signatures are available and enable multi-NBI authentication, the data pre-processing module involves a transformation model that leverages the EMG activity from the EMG channel and the EEG activity from the EEG channel to generate a synthetic EEG channel from the motor cortex (FCz location). Additionally, to augment the dataset, the data preprocessing sub-processor is further configured to implement a pre-trained generative model that generates, from the two existing EEG channels of the right temporal lobe, one new synthetic EEG channel from the left temporal lobe (T9 location in the 10-10 system). From this operation, the present example allows obtaining five channels, two of which are synthetic (i.e., EEG from the motor cortex and EEG from the left temporal lobe).

Finally, the datastreams are segmented around the two auditory and muscle contraction events, data segments are concatenated, and data augmentation is performed by temporal sliding window, after which the resulting segments of each datastream are normalized.

The resulting five sets of pre-processed segments (which, when combined, may yield channels x samples greyscale images) are then sent to the NBI Generation module in near-real-time, along with a preprocessing Metadata that conveys information about the transmitted data (e.g., modality, biometric source, quality score, synthetic or real datastream, etc).

Besides adequate data cleaning, the data preprocessing sub-processor makes the authentication system 1, and the associated method, adaptable to the user signatures already stored in the user's authentication profile with strategic data augmentation methods including signal mixture separation, synthetic channel generation, or wavelet decomposition.

Identity generation sub-processor 114 (also illustrated in its general architecture in Figure 2.E): the identity generation sub-processor 114 converts the input neurophysiological data segments into NBIs. The identity generation sub-processor 114 receives the pre-processed segments (EEG1 segments: the four redundant temporal EEG channels; EEG2 segments: the motor cortex channel; EMG segments: the EMG channel from the flexor muscles), as well as all the Metadata produced at this stage of the authentication system 1. The identity generation sub-processor 114 first computes the possible combinations of available channels. In this example, there may be seven possible combinations: {EEG1} alone, {EEG2} alone, {EMG} alone, {EEG1, EEG2}, {EEG1, EMG}, {EEG2, EMG}, {EEG1, EEG2, EMG}.

Some of these combinations match with pre-calibrated NBI Generators for which the user holds pre-stored user signatures in their profile, such as:
- a first NBI Generator, which is a multi-task model that was pre-calibrated on datasets of {EEG1}, {EEG2}, and {EEG1, EEG2}, and may receive these three combinations of channels
- a second NBI Generator, which was pre-calibrated on EMG data from the flexor muscles
- a third NBI Generator, which was pre-calibrated on datasets of {EEG2, EMG} channel combination (i.e., pre-calibrated with inputs integrating one EEG channel from the motor cortex, and one EMG channel from the forearm flexor muscles

For these five combinations, five types of NBIs are generated with the corresponding available pre-trained first NBI Generators (three types of NBIs, including one composite NBI), second NBI Generator (one types of NBI), and third NBI Generator (one composite types of NBI). As multiple segments were produced for each input channel in the data preprocessing step, multiple NBIs per type of NBI are produced for each combination of channels.

For example, first NBI Generator is a multi-path multi-task model that captures the temporal and spatiotemporal dependencies of the available EEG channels with pyramidal spatial convolutional network and bidirectional Long Short-Term Memory blocks in parallel, the resulting latent vectors of which are fused with fully connected layers. Accordingly, the architecture of the other second and third NBI Generators are tailored to the input modality and channel combinations. In the present example, the first NBI Generator was calibrated through at least 10 epochs allowing for early stopping using a cross-entropy loss function and with mini-batch gradient descent of 64 batches of low learning rate and high momentum using a 20-fold cross-validation on a population of alpha users. Regularization is achieved with layer-specific dropout and batch normalization, and L2 regularization. Hyperparameter tuning was achieved with Bayesian optimization allowing for early stopping. The NBI is here obtained as the N-1 latent vector.

Besides the NBIs, the identity Generation sub-processor 114 outputs Metadata, that notably relates to the channel combinations involved with each generated NBI. Once the NBIs are generated, any intermediary neurophysiological data (e.g., the raw and pre-processed datastreams) are deleted, if not done so already, and not kept in memory any longer.

The identity Generation sub-processor 114 advantageously makes the authentication method and system adaptable to the biometric data that can be measured from the user's body, as these five NBIs were not generated with the same channel combinations and result from different modalities, biometric sources, and NBI Generators that may have different architectures and training strategies, and therefore carry different representations of the user's specificity, notably through composite NBIs.

Identity Management Sub-Processor 115 (also illustrated in its general architecture in Figure 2.F): this sub-processor computes the authentication result based on the input NBIs and the Metadata created at this stage of the authentication process. In this example, the final step of the authentication process is performed by computing the cosine distance between generated NBIs and corresponding user signatures (i.e., generated with same NBI Generators, for the same combinations of EEG1, EEG2, and EMG, in similar recording conditions). In this example, the authentication threshold (i.e., the NBI-signature distance threshold for authentication) is dynamically adjusted so that a False Acceptance Rate (FAR) is maintained below 0.02% (i.e., one every 5000 impostors' signature is wrongfully authenticated) for the alpha population of 420 enrolled (Neuro ID) users who previously authenticated with at least one of similar conditions and produced between two and 60 signatures.

The selective value of 0.02% is dynamically and automatically determined from a combination of conditions, which include: the high level of security required to authenticate to a password manager, the necessity of maintaining a high True Acceptance Rate (TAR) for a protected space to which the user must often authenticate, the quality score obtained for EEG1, EEG2, and EMG from the preprocessing Metadata, the fact that the neurophysiological CAPTCHA was successful, the presence of composite NBIs, the presence of modalities that hold a large amount of user-specific neuromarkers (e.g., EMG), the neurophysiological information of which was maximized through the selection of a best selected protocol, the presence of many signatures stored for that user for these channel combinations, and a high acceptance rate demonstrated for that user during previous authentication attempts.

The authentication threshold necessary to reach a value of 0.02% FAR is determined with a receiver operating characteristic (ROC) curve, where the TAR-FAR pair values are calculated for varying values of authentication threshold, and where the TAR is computed by genuine distances between the user's genuine signatures and the FAR by weighted impostor distances between the user's signatures and the signatures of the other users enrolled with the Neuro ID technology.

In the example developed here, where the authentication threshold is set to obtain a FAR = 0.02% and where all generated NBIs are compared to all stored user signatures, the following unbiased TAR results of the (Neuro ID) authentication system 1 and method associated are obtained, for each channel combination, for a beta population different from alpha population used for NBI Generator(s) calibration:
- {EEG1}, {EEG2}: TAR ∈ [82%; 86%];
- {EEG1, EEG2}: TAR = 91%;
- {EMG}: TAR = 94%;
- {EEG2, EMG}: TAR = 96%.

These results advantageously demonstrate the strength of multimodal and/or composite NBIs for highly-specific user authentication. Moreover, the availability of multiple NBIs for five types of NBIs is leveraged to strengthen the authentication process. In a first authentication approach, the five types of NBIs are compared to the corresponding genuine signatures and authentication is achieved if, for at least on type of NBI (e.g., for {EEG2, EMG} NBIs), the average of the NBI-signature distances achieves the authentication threshold, in which case the TAR reaches 99%.

In another multi-factor authentication approach, at least two types of NBIs (e.g., for {EEG2, EMG} and {EEG1, EEG2} composite and/or multimodal NBIs) must achieve successful authentication. This approach is more selective and secure, lowers the FAR to 0.009%, and achieves up to TAR = 90%.

In another approach, all generated NBIs and corresponding genuine signatures are compared, and the fraction of NBI-signature pairs for which the user is authenticated is computed and compared to a pre-determined authentication threshold rate. In this approach, a pre-determined authentication threshold rate yields a TAR of 92%. Other examples of NBI management may be considered, such as methods relying on feature or score level fusion, grouped (e.g., stacked) NBIs and ensemble methods, etc.

In this example, the authentication system 1 performs a multi-factor authentication with the generated {EEG2, EMG} and {EEG1, EEG2} types of NBIs, which results in a successful authentication for the user. The successful result is relayed by the user-system communication sub-processor and the earbuds as a 'successful authentication' sound. The positive authentication result is transmitted to the password manager, that automatically fills the necessary credentials and provides access to the user of the protected website. The generated NBIs and their related metadata (quality score, authentication score, etc) are stored as new user signatures in the user's authentication profile. In this example, after access is granted, the data centralization sub-processor continuously streams EEG data from the EEG earbud channels, and the session remains open as long as the authentication system 1 (Neuro ID solution) demonstrates that the user is accessing that session. If the user's presence or identity is not proven anymore (e.g., the datastream is stopped, there is a variation in some of the EEG features, NBIs are continuously generated but the authentication process fails), the authentication system 1 requests the password manager to stop access to the protected website.

A Neuro ID-monitored password manager increases security (neurophysiological signatures and signals are difficult to forge and ensure presence of the user, notably with steps of continuous authentication) and simplify the user's experience (no risk of password loss and fast seamless hands-free authentication experience), both of which are key requirements in professional situations.

### Example 2: (Neuro ID) Authentication using one mixture channel of EEG and EOG modalities

A neurophysiological data 15 is recorded during a selected best protocol of visual stimulus (e.g., eye-following a moving flashing dot in a maze) through a mixture channel obtained from a bioelectric sensor embedded in the nose pad of smartglasses and in sustained contact with the user's forehead. The corresponding mixture signal is pre-processed by the Data Pre-Processing sub-processor (e.g., band-pass filtering, artifact removal, centering, whitening transformation) and the mixture signal is separated (e.g., using ICA and frequency analysis, or trained machine learning techniques) to extract two separate EEG and EOG modalities. In the same conditions as in the first example (FAR = 0.02%), the extracted single EEG channel returned TAR = 84%, the extracted single EOG channel returned TAR = 69%, the unseparated single mixture channel returned TAR = 86%, and the combination of the EEG and EOG channels returned TAR = 89%. In the three first cases, an NBI was generated with one channel, while a combined NBI was generated in the last case with separate EEG and EOG modalities. The NBIs were compared with stored user signatures generated using the same modalities by the same NBI generators trained on these modalities. The combined EEG-EOG-based NBI was able to better identify the user-specific spatiotemporal dependencies from the input separated signal than from the unseparated single mixture signal, yielding higher TAR results.

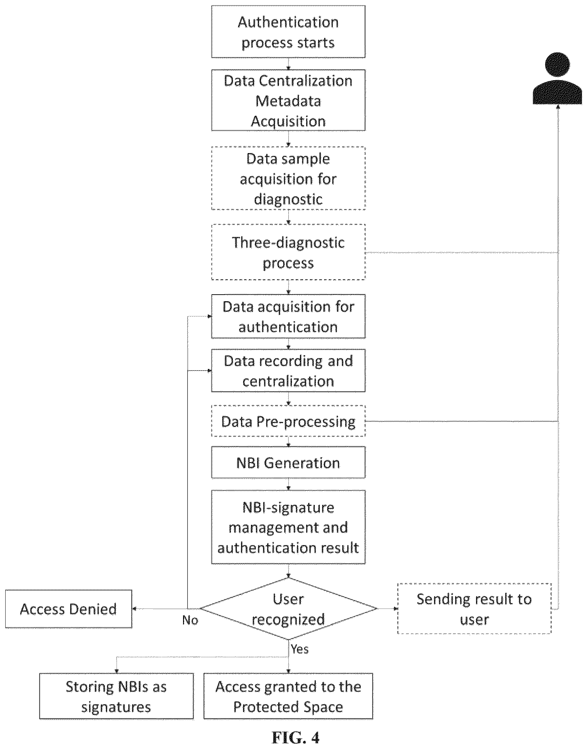

### Example 3: Example representative of the steps of the authentication process executed by the authentication system 1 to authenticate the user (Figure 4)

Figure 4 illustrates the authentication process applied by the authentication system 1 according to several embodiments. Once the authentication process starts, a series of steps unfold engaging some or all of the sub-processors comprised in the authentication system 1 in the authentication process. Once the authentication result is output, if the user is not recognized (i.e. negative authentication result), their access to a protected space may be denied. In contrast, if the user is recognized, they will be granted access to a protected space and the NBIs generated during the authentication process may be stored in a memory as new user signatures.

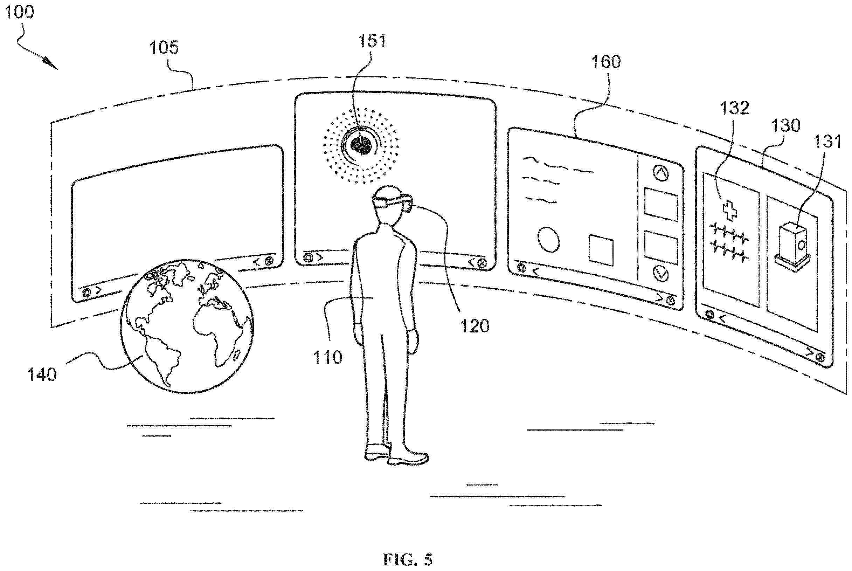

### Example 4: Authentication system 1 (i.e. Neuro ID) & spatial computing (Figure 5)

The (Neuro ID) authentication system 1 addresses the need for a seamless and rapid authentication method that relies on natural and intuitive gestures and commands that do not disrupt the user's immersive experience (e.g., as opposed to current disorienting approaches of virtual keyboards and virtual password typing). Figure 5 depicts an exemplary physical environment 100. Within this environment, user 110 is illustrated operating an exemplary electronic device 120, being a multi-purpose virtual reality headset. This device functions within a specified Protected Space 105 that includes one or more screens, referenced as 160. These screens may either be physical structures or objects, or they may denote regions or surfaces on a wall where content can be displayed to the user by the electronic device. Alternatively, screen 160 might represent a distinct area, separate from a wall or any other surface, where a virtual screen is capable of being displayed, such as in an open area within the environment where a freely floating virtual screen can be visualized. Upon recognizing the user, one of the screens presents the authentication status, labeled 151, which may manifest on any of these screens 160. In the event of successful authentication, the authentication result may be represented through various forms including a validation logo, a circled checkmark, a signal strength indicator, or a composite visual representation, all indicating that user 110 has been successfully authenticated. The composite visual representation, as an example, features the validation logo in a prominent position. Surrounding this logo is the circled checkmark, directly conveying authentication success. Located immediately adjacent, a signal strength indicator is shown, demonstrating that the user is efficiently connected via at least one neurophysiological signal. Illustratively and without limitation, in scenarios where exclusively brain signals are considered, the authentication status 151 may be visually represented by a validation logo. This logo may include a stylized representation of brain waves or a simplified brain icon, both encased within a circled checkmark. Additionally, the authentication status 151 might also appear as a visual element 140 outside the screens. Once authenticated and recognized, the user accesses a personalized session, noted as 130. This access allows the user to automatically connect to their extended reality (XR) applications, referred to as 131, or to personalized content - whether interactive or non-interactive, identified as 132 - that becomes available within a user's personalized session 130, which could either be from a previous or a new session. A user's personalized session, designated as session 130, is configured to adapt seamlessly to the user's pre-established settings and preferences. This adaptation encompasses a comprehensive array of operating system settings, i.e., any extensive customization options within the software ecosystem.

Furthermore, session 130 is engineered to dynamically adjust its interaction modalities in response to the user's current physiological state. Such adjustments are aimed at optimizing user comfort and operational efficiency, ensuring that the system's interface modality (e.g., touch, voice, gesture) and presentation (e.g., color scheme, font size) are optimally aligned with the user's immediate physiological needs and preferences. This dynamic adjustment process leverages real-time data on user physiological indicators, such as heart rate or eye strain, ..., to facilitate a user-centric interaction experience that prioritizes ergonomic efficiency and personalization. The authentication result for user 110 may comprise, for example, visual notifications, auditory alerts, images or animations, video notifications, popups or tooltips, email or SMS notifications, dynamic interface changes, biometric confirmations, voice recognition feedback, or haptic feedback.

### Example 5: A user's biosensing environment

To perform neurophysiological biometric (i.e., Neuro ID) authentication, the user 110 must be in a biosensing environment that includes at least one neurophysiological sensor in close proximity to or in contact with the user's body (e.g., scalp, face, other parts of the head, forearm, hands, trunk, or any other body locations where a neurophysiological sensor can detect biometric data 170) and may include other non-neurophysiological sensors, such as cameras, which may or may not be in contact with or close to the user's body. The data 170 measured by the user's biosensing environment is sent to dedicated DAQs via channels, involving at least one transceiver.

The sensor 180 and dedicated DAQ in the user's biosensing environment may be integrated into a stand-alone device solely for capturing biometric data 170 (e.g., an individual active EMG electrode on a temple with a miniaturized DAQ, a tattooed active EMG sensor behind the ear with Bluetooth transceiver related to a non-wearable hardware, a neurophysiological patch on the earlobe with behind-the-ear DAQ, an EMG bracelet with integrated DAQ, a heart rate (ECG) monitor strap around the trunk with integrated hardware, or a stand-alone webcam connected to a laptop).

Alternatively, the sensor 180 and dedicated DAQ in the user's biosensing environment may be integrated into an electronic device 120, preferably a multi-purpose device (i.e., a device that has at least one other role beyond biometric data 170 collection, such as a laptop with a fingerprint sensor). Multi-purpose devices may be daily-life devices that the user 110 can comfortably wear for long durations on a daily basis, enabling a seamless integration of the authentication process into daily activities. For example, the neurophysiological sensors (e.g., any of EEG, EMG, fNIRs, EOG, PPG, EDA, or other sensors) are placed in strategic locations on the exterior surface of the multi-purpose device where the device naturally applies sustained pressure on the user's body so that, when the device is worn, continuous skin-electrode contact is maintained. Due to the frequent use of such devices, it has become natural to sustain these pressure points without discomfort (e.g., in-ear pressure imposed by earbuds; nose bridge and behind-ear pressure imposed by glasses; eyebrow, cheekbone, and temporal pressure imposed by VR/AR headsets, occipital or scalp pressure imposed by headbands or by the frame of the previously-listed devices).

To ensure comfort, the sensors 180 may be integrated into the multi-purpose devices in multiple ways, such as dry sensors, hard material sensors embedded into comfortable hypoallergenic soft materials, polymer composite sensors (e.g., carbon-based fillers and metallic fillers), conductive polymers (e.g., polypyrrole (PPy), polythiophene (PT), and polyaniline (PANI)), sponge sensors, dry non-contact (capacitive) sensors, or dry foam sensors.

The user's biosensing environment may be integrated into one or more of the following exemplary multi-purpose devices:
- Head-wearable devices, including:
   ∘ Eye-wear devices, like VR/AR/MR headsets, smart glasses, and holographic glasses;
   ∘ Smart helmets;
   ∘ In-ear devices, like earbuds;
   ∘ Ear devices, like headphones or earrings;
   ∘ Behind-the-ear devices, like headphone extensions or hearing aids;
   ∘ Back-of-the-head devices, like EEG cortex analyzers;
   ∘ Headsets, like auditory headsets, gaming headsets, work headsets; or
   ∘ Headbands;
- Non-head-wearable devices, like:
   ∘ Wrist devices, like smartwatches;
   ∘ Hand devices, like smart rings or gloves;
   ∘ Chest devices, like smart EKG monitors for sports;
   ∘ Fitness trackers; or
   ∘ Smart clothing and textiles, like smart sleeves or smart leggings;
- Or any other devices, like:
   ∘ Research-grade, medical, or laboratory equipment, like EEG caps integrated into VR headsets; or
   ∘ Brain-computer interface devices.

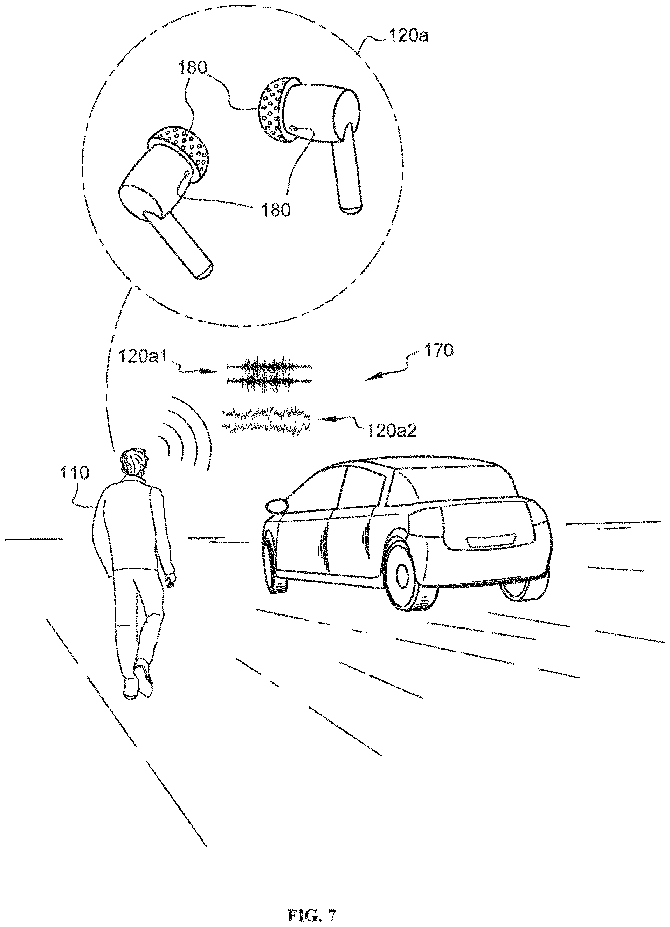

For example, in-ear devices 120a like earbuds may integrate sensors on their exterior surface or as conductive ear tips 180 to detect neurophysiological signals (120a1, 120a2) from contact with the ear canal and the pinna (inferior concha, superior concha, helix, anti-helix, tragus). Sensors 180 may be configured to be a variety of sensors to capture a variety of modalities from the user's body, such as EEG sensors to detect EEG activity 120a2 from the temporal lobe of the brain, fNIRS sensors to detect hemodynamic signals from the temporal lobe of the brain, EMG sensors to detect EMG signals 120a1 from the masseter and temporal muscles, EOG sensors to detect eye movements, or PPG sensors to detect variations in blood volume in the anterior auricular artery. Example of in-ear device 120a is shown in figure 7.

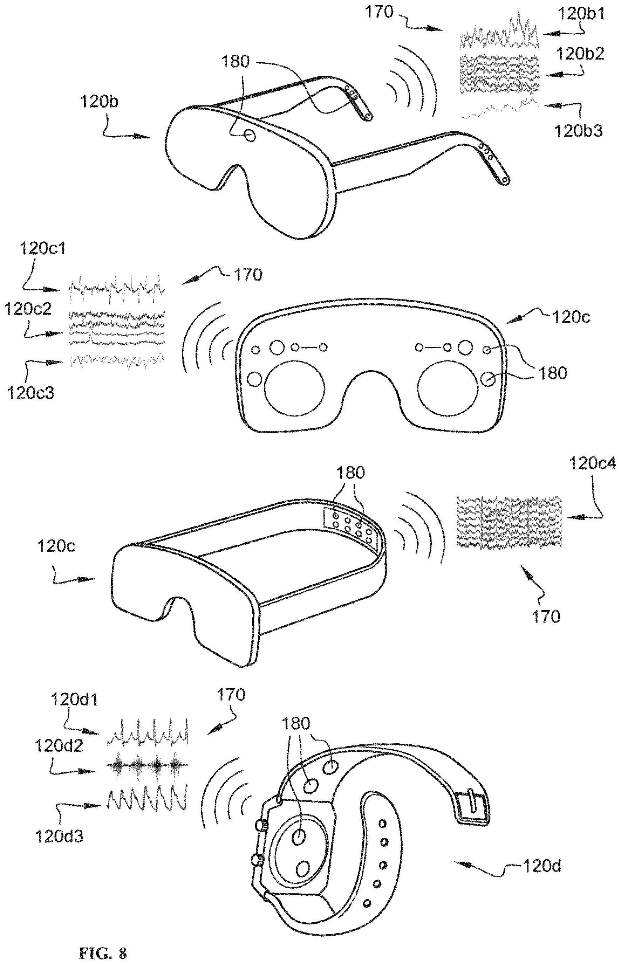

Eyewear devices 120b like smart glasses may integrate sensors 180 on the exterior surface of the nose pads (e.g., EEG, EMG, EOG, fNIRS, PPG, EDA sensors to detect the neurophysiological activity (120b 1, 120b2, 120b3) of various biophysiological sources like the prefrontal cortex, front muscles, eyes, nasal arteries, sweat glands) and on the branches that are in contact with the user's scalp (e.g., fNIRS 120b 1, EEG 120b2, EDA 120b3, EMG sensors). Examples of eyewear devices 120b are shown in figure 8.

Headset devices 120c, like augmented reality headsets, virtual reality headsets, or mixed reality headsets, may integrate sensors 180 at a high number of recording points on the exterior surface of both the head-mounted display and the head straps. EEG and fNIRS sensors may be mounted onto the facial interface of the headset, detecting EEG 120c2 and/or hemodynamic activity 120c3 from the prefrontal cortex, as well as EMG sensors to detect the myoelectric activity of the muscle groups responsible for jaw clenching, smiling, eyebrows frowning and raising, wrinkling the nose, eye movements, and blinking, EOG sensors for eye activity 120c1, EDA sensors, or PPG sensors to detect activity in the nasal, superficial temporal, and supraorbital arteries. Additional sensors may be integrated into the head strap and be configured, for example, as EEG and fNIRS sensors to detect the activity 120c4 (EEG) of the parietal occipital and temporal lobes of the brain.

Wrist devices 120d like smartwatches may integrate sensors 180 into the interior surface of the wristband and/or the casing that are in constant and sustained contact with the user's skin. These sensors can include PPG, EDA, ECG, or EMG sensors to detect the neurophysiological activity (EMG 120d2, PPG 120d3) of the high concentration of arteries, sweat glands, and wrist flexor/extensor muscles in the wrist area, as well as cardiac ECG activity 120d1.

Depending on the design of the multi-purpose device, the sensor placement, and the sensor configuration, different modalities are detected from different biophysiological sources of the user's body in different numbers of neurophysiological channels. All of these variables are important in the adaptable synthesis of a suitable data acquisition protocol for user authentication using Neuro ID Technology.

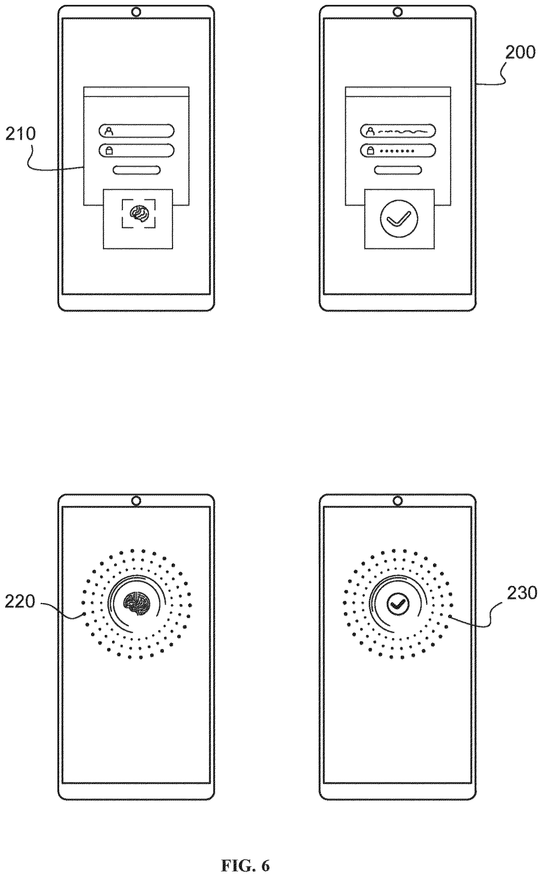

### Example 6: Login Operation (Figure 6)

A user wishes to access a protected space, for example in the form of a digital platform (e.g., an application or a website) that requires to log in. Traditionally, digital platforms require credentials (e.g., a username and a password) or a biometric authentication method (e.g., facial recognition) to access the protected space. CAPTCHAs are often requested from the user before the authentication step to protect the protected space from bots and automated fraudulent authentication attempts. In all these cases, authentication requires the user to perform an action that may prove repetitive or constraining (e.g., loss of password, or inability to use facial recognition in a dark room). Such methods of authentication are not optimal for digital platforms that the user must access seamlessly. To improve the user's experience, solutions are currently being proposed. For example, the authentication step may be bypassed (e.g., the user's credentials are kept in memory for 30 days on a recognized device). As another example, automated login methods are proposed, such as leveraging a profile to which the user is already authenticated to access that new protected space. These solutions, however, take the user's genuine identity as granted, which weakens security.

The Neuro ID Technology proposes a solution for secure and seamless login operations, for example, to digital platforms that accept the Neuro ID Technology as an authentication method: the Neuro ID Authentication process. This solution is illustrated for example in figure 6. The digital platform 210, which requires a login operation and may be an application on a smartphone 200, prompts the Neuro ID authentication system and method. The decision to use Neuro ID technology for login may be automatic, chosen as the preferred solution in stored user preferences, or confirmed by the user. In the example of an application, the authentication system is installed on the user's smartphone. If necessary, the user accepts all necessary permissions. A connected device is recognized by the data centralization sub-processor 12, which integrates at least one neurophysiological sensor (e.g., a pair of synchronized earbuds 120a with sensors, like EEG, fNIRS, EMG, EOG sensors). Following steps of Diagnostic, Protocol Selection, NBI generation, and NBI management, a neurophysiological-based CAPTCHA is performed that ensures the user is a human, and the user is recognized as the genuine user after successful NBI-signature comparison 220. These steps follow strong security protocols (e.g., NBI generators, signatures, and NBIs may be managed locally in Secured Enclaves, like Trusted Execution Environments on Android devices, or externally in a protected cloud). Steps of NBI-signature comparison and valid authentication are communicated to the user by adequate feedback 230 such as visuals and/or auditory notifications. Once the user is authenticated, the Neuro ID API returns the positive authentication result and requests the digital platform (e.g., the protected application on the smartphone) to grant access to the user.

The Neuro ID authentication process provides a higher level of security because of the higher user-specificity and complexity of the generated NBIs than traditional login methods, while enabling a seamless interaction for the user while maintaining security (e.g., no automated access based on stored credentials). The Neuro ID experience is seamless for the user, as it occurs in the background without the user's knowledge, and without requiring a commitment from the user as strong as remembering and providing credentials, as the user only needs to perform the best-selected protocol for data acquisition (e.g., raising the arm and touching the temple with the index finger). The Neuro ID authentication method provides a new generation of fast, seamless, and secure login operations.

### Example 7: Electronic signatures and seals certificates

When a user's digital signature is stored within an authentication server, it enables the use of that signature as both an electronic signature to verify the identity of the signer and an electronic seal to assert the origin and integrity of a document. When backed by a Neuro ID authentication process, electronic signatures and seals meet the highest security level set by the eIDAS regulation within the EU. A Qualified Electronic Signature (QES) is legally recognized as the equivalent of a handwritten signature. It meets all the criteria of an Advanced Electronic Signature but is also created using a qualified signature creation device and based on a qualified certificate for electronic signatures. These certificates ensure the highest level of signer identity verification and document integrity.

When backed by a Neuro ID authentication process, the QES level is achieved as the Neuro ID Authentication process proves the identity of the signatory, as well as their physical presence and personal commitment when the electronic signature is produced. The presence of the signatory is demonstrated at the time of the electronic signing by the presence of neurophysiological signals detected from the user's body by the biosensing environment, received by the data centralization sub-processor 12, and are proven to be specific to the signatory (i.e., as proved by NBI-signature comparison in the Identity Management sub-processor 115). Furthermore, neurophysiological signals are continuously streamed during the entirety of the electronic signature process, proving the signatory's commitment throughout the complete process, ensuring, for example, that the signatory has read (or at least scrolled through) the entirety of the document until electronic signature generation. This approach provides legal assurance, but also simplifies the signatory's experience in generating a QES, as it provides a seamless solution that is continuous in time, which is otherwise difficult to address (e.g., complex logistics or equipment like camera-supported evidence, or in-person meetings with a certified person). The integration of the Neuro ID Authentication process into the electronic signature process is achieved by computing the digital signature hash with the cryptographic algorithms of the Signature Provider from both the document's content and the encrypted NBIs generated during the signature process, optionally with an additional traditional private key held by the signatory. The electronic seal certifies the originator of the seal as the creator of the document it is attached to, ensuring the document's integrity and a secured connection between the seal's creator and the electronic document. Finally, a digital certificate based on the user's signature is created to encapsulate the details of the authenticated session. This certificate, which can be verified during future audits, serves as a secure record that confirms the authenticity of the session and the identity of the user involved.

### Example 8: Keyless Vehicle Access (Figure 7)

Traditional vehicle access systems (e.g., cars, bike sharing, electric scooters) are protected spaces that may be unlocked with a number of physical and digital keys, including physical keys, smart keys, pin-based keypads on the vehicle's frame, fingerprint sensors on the door's handle, or applications on smartphones. These traditional access systems can be lost, stolen, duplicated, hacked, or spoofed. Consequently, the locked vehicle can be accessed by an impostor instead of the genuine user, as long as they hold the key, without verification of the identity of the user. The Neuro ID Authentication process offers an alternative that provides a higher level of security than traditional vehicle access systems. When a user intends to access the protected space of the vehicle (e.g., unlock the door), the Neuro ID Authentication process, which is integrated into the vehicle's hardware, is prompted. This solution is illustrated for example in figure 7. The intent of the user to access the vehicle's protected space is detected in several ways. The vehicle continuously monitors the presence of devices in its vicinity that integrate neurophysiological sensors and can be recognized by the data centralization sub-processor 12. Cameras detect the presence of a person approaching the vehicle. Using the data from the camera, a machine learning method may preliminarily detect behavioral traits specific to the genuine user and their intent of accessing the protected space. A tactile sensor may detect human-vehicle physical interaction. Once the Neuro ID Authentication process is prompted, neurophysiological signals are captured in real-time from the user's body with a variety of wearable devices (e.g., earbuds 120a, smart glasses 120b, a headset 120c, a smartwatch 120d as represented in figure 7 and figure 8) that integrate neurophysiological sensors (e.g., EEG, fNIRS, EMG, EOG, EDA, PPG sensors) and transmitted wirelessly via secured communication protocols to the data centralization sub-processor 12, which is installed in the vehicle's hardware. Alternatively, such sensors may be integrated into the vehicle, improving the user's experience by eliminating the need to wear such devices. Once NBIs are generated and successfully compared to the user's signatures by the identity generation sub-processor 114 and the identity management sub-processor 115 respectively, the user is authenticated and granted access to the vehicle, which then unlocks. This novel vehicle access system, which relies on neurophysiological authentication, ensures that only pre-determined genuine users may access the vehicle, limiting the risks of key theft or spoofing of other weaker biometric traits (e.g., fingerprint). Additionally, the user's experience is improved by removing the risk of key loss or theft, while the data acquisition protocol may be seamless for the user if pre-set to the assumption that the user is systematically walking towards the vehicle or standing next to the vehicle during the authentication process.

### Example 9: Financial transactions and payment authorization

Financial transactions, whether performed physically or online, usually require knowledge of card details and credentials to be used (e.g., the CVC of the credit card for physical transactions, or the passcode of a bank application for digital transactions via a smartphone). These methods cannot prove the user's identity nor their intent when performing the transaction. Incorporating the Neuro ID technology into payment processes addresses these limitations. Consider a user who wishes to make a payment through an online banking application on their smartphone, which incorporates Neuro ID technology for enhanced security. The user has a smartphone with the online banking application installed or a credit card management app. The user has already registered their bank account or bank card and a user's profile stored. This example, tailored for an individual user, scales to professional and industry-scale scenarios.

The user first accesses their protected banking space with traditional methods, such as a multifactor authentication process involving a username, password, and passcode. Once logged in, the user starts the transaction process. The transaction process may comprise, for example, the following steps: selecting the `Make a Payment' option on an app or web page on their smartphone or computer and choosing the bank card they wish to use for the transaction from the 'Cards' section. The application may display the details of the payment, such as the payee's information, the amount to be paid, and the selected bank card. The user may thus review the payment details and confirm the transaction, for example by selecting the `Confirm Payment' button. This first stage of the process determines the user's intent to perform the transaction. To complete the transaction, the application may initiate a verification process. This stage adds a supplementary layer of security that proves the genuineness of the user performing the transaction (i.e., not an impostor who hacked the genuine user's credentials and access to the banking space). The Neuro ID technology, installed for example in the hardware of the smartphone, detects the presence of neurophysiological sensors in the devices worn by the user (e.g., EEG and fNIRS sensors embedded in earbuds 120a or in a specialized headset or headband 120c), proposes a passive data acquisition protocol for the user (e.g., a series of auditory stimuli, like rhythmic beeps, generated by the earbuds), gathers and optionally preprocesses the resulting neurophysiological signals (e.g., EEG and hemodynamics signals) detected from the user's scalp, generates NBIs specific to the user, and successfully authenticates the user by adequately managing NBI-signature comparison (see figure 4). These steps occur without the user's voluntary involvement and in near real-time. Upon successful authentication, the Neuro ID system validates the genuine user's identity and communicates this outcome to the banking application that authorizes the payment transaction, processes the payment, and optionally displays a confirmation message to the user, indicating that the payment has been successfully made.

The Neuro ID technology hence increases the security of the payment authorization by demonstrating the genuine identity of the user performing the transaction, which cumbersome multi-factor authentication methods inherently cannot guarantee. This method therefore reduces fraud, which is a loss of time and funds both for the user and the bank. This streamlined payment process is user-friendly as it is real-time, passive, and free of login information loss or theft. Additionally, the Neuro ID technology can safeguard the validity of the user's intent; the neurophysiological signals detected for authentication may also be processed to assess the user's mental state at the moment of the transaction. For example, patterns specific to high emotional stress may be detected, indicating the user is under external pressure to perform an undesired transaction. Additionally, the transaction may be halted if the user is identified to be under the influence of illicit substances like drugs. Conversely, traditional biometric methods, like fingerprint or facial recognition, cannot offer such high-security measures.

Finally, the Neuro ID technology offers a hands-free method that allows the user to leverage a biometric method without physically interacting with an authentication system (e.g., pressing a finger onto a fingerprint sensor or facing a camera). This is particularly advantageous in physical Just Walk Out stores, for example, where the aim is to optimize the user's seamless experience while securing the transaction process.

### Example 10: Verification of the identity of the interlocutor

In the context of an alarming increase in telephone fraud, especially in sensitive sectors like banking and sophisticated scams involving fake financial advisors, Neuro ID technology may authenticate the identity of individuals, effectively distinguishing between genuine users and fraudulent impersonators. For example, a notable rise in banking scams was recently identified, where criminals impersonate bank officials to mislead customers into divulging sensitive information or transferring funds to fraudulent accounts. Traditional security measures such as the use of four-digit PIN codes and banking app authentication requests have proven inadequate in addressing these sophisticated scams. Moreover, traditional approaches like videotelephony meetings can no longer ensure the genuineness of the interlocutor with the recent emergence of generative AI and 'deepfakes'. These challenges highlight the need for an innovative solution to authenticate identities in a reliable and unforgeable manner. Neuro ID technology offers a swift and reliable method for customers to ascertain whether they can converse with confidence.

Consider a digital or telephonic banking interaction between a certified banking advisor and a customer. This example scales to and applies to any other remote interaction between a person and an interlocutor who would benefit from being authenticated in real-time, such as a lawyer, financial advisor, or doctor. Through a real-time verification system that incorporates Neuro ID technology, the banking advisor can demonstrate their legitimacy to customers. The banking advisor wears, for the duration of the remote interaction, a device that integrates neurophysiological sensors and is approved by the Neuro ID technology for the purposes declared by the entity (i.e., the banking entity) that requires authentication. The device and the pre-set data acquisition protocol may be tailored to the authentication context, its sensitivity, and the physical environment of the bank personnel (e.g., a multi-sensor headset detecting several modalities from the banking advisor's scalp through multiple channels in a controlled environment such as a quiet office, to optimize consistency and repeatability between sessions). The banking advisor may first achieve a pre-determined data acquisition protocol for an initial highly reliable authentication step that involves, for example, a visual stimulus and/or a voluntary muscle contraction. The resulting multiple composite NBIs authenticate the banking advisor in a multi-factor neurophysiological approach with Neuro ID technology. Successful authentication may display a verified checkmark or badge on the customer's phone screen. This visual confirmation signifies that the bank representative's profile is genuine, duly belonging to the banking service, and authorized to access the customer's sensitive data. Then, the neurophysiological data 15 of the banking advisor is streamed, preferably continuously streamed, following a passive 'background' data acquisition protocol, and NBI-signature comparison is performed in real-time, maintaining the presence of the verified checkmark or badge on the customer's phone screen. In case of loss of connection at any stage between the biosensing environment, the Neuro ID software, and the banking security system; or in case of unsuccessful NBI-signature comparison for a certain duration of time, or in case of suspicious patterns in the detected neurophysiological signals (e.g., detecting high emotional stress), the user may be made aware of this irregularity as the verified checkmark or badge disappears from the customer's phone screen, which may indicate that the interlocutor changed or may not have genuine actions. This feature not only ensures that customers are communicating with legitimate bank staff but also significantly increases trust and security in digital and telephonic banking interactions, effectively mitigating the risk of dealing with impostor financial advisors. Real-time and continuous biometric verifications of this sort are not achievable with other modalities, such as fingerprint recognition, which would require the banking advisor to press a fingerprint sensor for the duration of the interaction. Additionally, the banking service may grant select employees access to specific clients and the processing of sensitive information. This streamlined management of interactions aims to enhance the protection of their clients by ensuring that only authorized personnel can handle sensitive data. Such a system not only simplifies the oversight of customer interactions but also reinforces the security measures in place to safeguard client information against unauthorized access or fraudulent activities. By guaranteeing the identity of the interlocutor, a real-time verification system that incorporates Neuro ID technology demonstrates the banking advisor to be a real individual and not a generative AI designed to deceive the party in question, notably in video conferencing communications. This system, which may also incorporate a neurophysiological-based CAPTCHA in its diagnostic methods, provides a reliable method to distinguish between legitimate human interactions and those orchestrated by automated systems and AI impersonators, thereby enhancing security and trust in digital communications.

### Example 11: Ledger wallets

Cryptocurrencies and digital assets are managed using a private key. Only the holder of the private key can perform digital transactions (i.e., send and receive crypto associated with that key). Therefore, the private key must be protected from theft or loss, which may otherwise lead to losing the assets associated with the compromised keys. Crypto wallets are physical or digital devices or programs that store the said private keys in a secure location, with additional functionalities of encrypting, signing transactions, or initiating transfers. Ledger wallets aim to maximize the protection of the user's assets by storing the user's private key in a wallet that is both non-custodial (i.e., a third party does not control the private keys, addressing the risk of company fraud or bankruptcy) and offline (i.e., cold wallet: out of reach of online threats). Accessing the content of the Ledger wallet first requires physically connecting the hardware wallet to a laptop or a smartphone via USB or Bluetooth connection, guaranteeing the user's intent to use the wallet. Then, the Ledger wallet is unlocked using a pin code on the hardware itself, providing a first layer of security that does not involve the potentially compromised smartphone or laptop. For a seamless user experience, the private keys stored on the Ledger wallet may be accessed via a user-friendly application on the connected smartphone or laptop (e.g., Ledger Live), where transactions can be performed. Navigating and interacting with the app, however, are performed physically by the user manually pressing buttons on the non-hackable external offline hardware wallet, providing a second layer of security. Finally, if the physical Ledger wallet is lost or stolen, a 24-word passphrase, which is physically stored in a secure place, or an ID-based key recovery service (i.e., Ledger Recover), involving legal documents and facial recognition, are available to securely restore the private keys.

The Neuro ID technology can integrate into the Ledger technology in various ways to further increase security and/or simplify the user's experience. As a preliminary note, the Neuro ID software may be installed on the Ledger hardware using, for example, the computer program product of this disclosure, so that it is, like the Ledger Wallet, a stand-alone offline service that does not rely on external hardware that may be compromised. Wherever the Ledger Wallet goes, the Neuro ID solution goes with it. Neuro ID technology can first and foremost replace the pin code of the Ledger Wallet and/or strengthen it as a second step in a multi-factor authentication approach. Indeed, a pin code may be stolen or hacked and cannot fully guarantee the identity of the person unlocking the Ledger wallet, contrary to Neuro ID technology that demonstrates the user's identity by NBI-signature comparison. In this approach, connecting the physical wallet to a smartphone or a laptop and/or entering the pin code initiates Neuro ID authentication. Neurophysiological signals are detected from the user's body (e.g., EEG signals detected by sensors embedded in earbuds 120a). These Neurophysiological signals may be synchronized with the Neuro ID's data centralization sub-processor 12 and sent with the adequate security protocols to the physical Ledger hardware on which the Neuro ID software is installed. Advantageously, the neurophysiological data 15 may be synchronously captured while the user is typing the pin code, ensuring repeatability between sessions of the data acquisition protocol and improving the reliability of the Neuro ID technology. A positive authentication with Neuro ID technology, which ensures that the user attempting to access the Ledger wallet is genuine, unlocks the device with guaranteed security. Then, Neuro ID technology can serve as an alternative solution to the physical action of pressing the buttons of the Ledger device when validating transactions. Every time a transaction is performed, the user's identity is verified in a new authentication step using Neuro ID technology, and proof of the user's identity by NBI-signature comparison is taken as confirmation of the user's intent to perform the transaction. This approach provides both the advantages of a seamless experience where the user does not need to have a physical interaction with the Ledger wallet and to prove its identity before performing a sensitive operation, which the physical interaction of pushing buttons cannot fully ensure. The Ledger wallet may be compromised between the moment the pin code is typed and the transaction is performed (e.g., the equipment is stolen after the user unlocked the physical hardware and the private keys are compromised). To address this limitation, neurophysiological data 15 may be continuously streamed from the user's body and the user's identity is monitored in real-time (e.g., by continuously performing new NBI-signature comparisons). If an irregularity is detected by the Neuro ID software installed on the Ledger wallet (e.g., loss of neurophysiological influx or unsuccessful NBI-signature comparison), the Ledger wallet locks, protecting the private keys. Finally, the current solutions for private key retrieval (i.e., 24-word passphrase and Ledger Recover) are cumbersome and/or subject to theft or loss. Those solutions can be accompanied or replaced by the authentication process provided by Neuro ID technology, which provides a more secure and seamless experience for the customer. A strong authentication step, relying on a more complex data acquisition protocol, multiple neurophysiological channels of various modalities, composite NBIs, and advanced NBI-signature management, can verify the user's identity with high reliability and securely retrieve the private keys. Consequently, Neuro ID technology can be leveraged to further protect the user's private keys and assets by integrating user neurophysiological authentication into Ledger wallets.

### Example 12: Strengthening the future trends of authentication protocols with Neuro ID technology

Login credentials (known by the user, e.g., username and password) form a weak class of authentication methods, as they may be lost or stolen, preventing the user from accessing their protected space. To strengthen security, multi-factor authentication (MFA) systems are rapidly emerging, where the second and third authentication factors may be a possession identifier (something possessed by the user, e.g., a physical or digital security key) and a biometric identifier (something the user is). In this approach, Neuro ID technology provides a new solution for biometric authentication beyond traditional facial, fingerprint, and retinal recognition. It integrates with the user's life seamlessly (e.g., integrating neurophysiological sensors in earbuds and providing seamless authentication based on the natural and constant neurophysiological activity of the brain) and provides a high level of security (i.e., highly user-specific patterns extracted from the neurophysiological signals).

Furthermore, to simplify the user's experience while increasing security, trends are converging towards removing the first authentication step that relies on credential identifiers and relying on a universal password less FIDO (Fast Identity Online) norm, which is either hosted on physical devices like security keys or on software components integrated into devices like smartphones and laptops (e.g., FIDO authenticator system based on TEE -Trusted Execution Environment- confirmation). In this new realm of authentication, the demand for versatile novel biometric authentication methods, like Neuro ID technology, is booming to guarantee the user's genuine identity, presence, and intent.

Furthermore, Neuro ID technology can be integrated into FIDO authentication methods to create a highly secure and user-friendly authentication system: a FIDO-Neuro ID authentication software. Consider a user wearing earbuds that integrate neurophysiological sensors (e.g., EEG sensors) and a synchronized smartphone with FIDO-Neuro ID authentication software. The user wishes to access their bank's online portal. During registration, the user registers their device with the bank's service. The Neuro ID method transforms the detected neurophysiological signals into neurophysiological signatures (i.e., a neurophysiological-based identifier for the user), and a FIDO-compliant public-private key pair is created. The neurophysiological signatures are securely stored by the Neuro ID system (e.g., in the TEE of the user's smartphone). The public FIDO key is securely stored with the bank's service, while the private key is stored on the smartphone.

During authentication (i.e., when the user wishes to log into their bank account), the newly detected neurophysiological signals are transformed by Neuro ID technology into NBIs that, upon successful comparison with the stored signatures, demonstrate the user's identity. Once the user's identity is confirmed with Neuro ID technology, the smartphone may use the FIDO private key to sign a challenge (e.g., a random piece of data) generated by the bank's service. Finally, the bank's service may verify the resulting cryptographic signature using the stored public key. If the signature is valid, the user is authenticated, and access is granted. This approach provides unparalleled security to the user and the bank's service in demonstrating that the user who attempts to log in is genuine, as they both hold their personal FIDO private key and are securely authenticated with Neuro ID technology. Similar approaches are immediately applicable to physical security keys.

## Claims

1. A neurophysiological biometric authentication system (1) for securely authenticating a user to access a protected space managed by at least one device, said system comprising at least one processor comprising:
• a data centralization sub-processor (12) configured to transmit centralization Metadata, wherein said data centralization sub-processor (12) is configured to receive at least one first biometric data comprising at least one neurophysiological data through an associated data channel and transmit said at least one first biometric data to a user recognition sub-processor;
• said user recognition sub-processor (11) configured to receive said at least one first biometric data and to output a recognition Metadata, said user recognition sub-processor (11) comprising at least:
- a protocol selection sub-processor (112) configured to receive at least said centralization Metadata, and to output protocol Metadata comprising at least an information concerning a data acquisition protocol to be used to collect said at least one first biometric data;
- an identity generation sub-processor (114) configured to generate at least one first neuro-biometric identifier, NBI, from at least said at least one first biometric data, using a first pretrained machine learning model, said first pretrained machine learning model being previously trained on subjects' data previously collected from a plurality of subjects using said data channel associated to the at least one first biometric data; and
- an identity management sub-processor (115), configured to:
∘ compare said at least one first NBI to at least one user signature stored in a memory and output an authentication result; and/or
∘ transmit said authentication result to at least one device to securely authenticate the user to access said protected space; and/or
∘ save said at least one first NBI as at least one new user signature in said memory;
said user recognition sub-processor (11) being further configured to generate said recognition Metadata as comprising at least said protocol Metadata and/or said authentication result.

2. The system (1) according to claim 1, wherein said data acquisition protocol to be used to collect said at least one first biometric data is synthesized based on at least one predefined protocol condition related to at least one of the following:
• a biometric data parameter;
• a user status;
• a user preference;
• an environment of the user;
• a signature availability;
• a use case.

3. The system (1) according to claim 2, wherein a condition score is associated to said at least one predefined protocol condition, and wherein said data acquisition protocol to be used to collect said at least one first biometric data is selected based on said condition score.

4. The system (1) according to any of claims 1 to 3, wherein at least one second biometric data different from said at least one first biometric data is received by the data centralization sub-processor (12).

5. The system (1) according to claim 4, wherein said identity generation sub-processor (114) is configured to generate at least one second NBI from said second biometric data, wherein generating said at least one second NBI comprises using a second pretrained machine learning model being previously trained on subjects' data previously collected using a data channel associated to said second biometric data.

6. The system (1) according to claim 5, wherein said identity generation sub-processor (114) is configured for selecting said first and/or second biometric data based on a selection criterion to generate said NBI.

7. The system (1) according to any of claims 4 to 6, wherein said first and second biometric data are used to generate a combined NBI using a third pretrained machine learning model, wherein said third pretrained machine learning model has been previously trained on subjects' data previously collected using a data channel combination comprising said data channel associated to said first biometric data and said data channel associated to said second biometric data.

8. The system (1) according to claim 7, wherein said identity management sub-processor (115) is further configured to:
- compare at least one of each of said first, second and combined NBIs to at least one user signature stored in a memory, and output an authentication result; and/or
- save at least one of said first, second, and combined NBIs as at least one new user signature in said memory.

9. The system (1) according to either one of claims 7 or 8, wherein an output authentication score is associated to at least one comparison of at least said first, second and combined NBIs to at least one user signature.

10. The system (1) according to claim 9, wherein said output authentication score is further compared to a threshold set according to at least one of: a quality parameter, a user preference, a signature availability, a biometric data parameter, a user status, an environment of the user, a use case.

11. The system (1) according to any of claims 5 to 10, wherein said identity management sub-processor (115) is further configured to:
- calculate a group NBI associated to said at least one first NBI and said at least one second NBI; and
- compare said group NBI to at least one user signature stored in a memory and output an authentication result; and/or
- save said group NBI as at least one new user signature in said memory.

12. The system (1) according to any of claims 4 to 11, wherein said user recognition sub-processor (11) further comprises a data diagnostic sub-processor configured to:
- receive at least said centralization Metadata, wherein said centralization Metadata comprising at least an information about at least one channel configured to transmit a user data, said user data being at least said at least one first biometric data or said at least second biometric data;
- perform at least one of: a first diagnostic process, a second diagnostic process, or a third diagnostic process,
wherein said first diagnostic process comprises:
∘ checking for each channel that said user data is a neurophysiological data; and/or
∘ verifying communication between the data centralization sub-processor (12) and said at least one sensor; and/or
∘ outputting a first group of channels;
wherein said second diagnostic process comprises calculating at least one quality parameter associated to each channel, said at least one quality parameter being representative of a characteristic of a user data collected using the associated channel, and outputting a second group of channels based on a comparison of said at least one quality parameter to a threshold; wherein said third diagnostic process comprises verifying that said user is a human user by identifying a presence of a human signal in at least said first biometric data;
said data diagnostic sub-processor being configured to generate diagnostic Metadata comprising information related to at least one of said first diagnostic process, said second diagnostic process, said third diagnostic process, and a group of channels comprising channels belonging to the first group of channels and to the second group of channels.

13. The system (1) according to claim 12, wherein said protocol selection sub-processor (112) is further configured to receive said diagnostic Metadata, and to output said protocol Metadata, wherein said protocol Metadata further comprises an information indicative of at least one of:
- a presence of communication between the data centralization sub-processor (12) and at least one sensor to be used to collect a user data; and/or
- a data quality parameter.

14. The system (1) according to claim 13, wherein whenever the presence of communication between the data centralization sub-processor (12) and at least one sensor is detected, said data centralization sub-processor (12) is configured to trigger an acquisition using said at least one sensor so to obtain a further user data.

15. The system (1) according to any of claims 1 to 14, wherein said user recognition sub-processor (11) further comprises a data preprocessing sub-processor configured to:
- receive at least said centralization Metadata and at least said at least one first biometric data; and
- apply a data pre-processing technique and/or a channel augmentation method on at least said at least one first biometric data;
- output preprocessing Metadata and at least pre-processed and/or augmented at least one first biometric data.

16. The system (1) according to any of claims 1 to 15, wherein said user recognition sub-processor (11) further comprises a communication sub-processor configured to receive said authentication result, and generate and output communication Metadata, said communication Metadata comprising at least one of the following:
- a notification for the user about an authentication status;
- an instruction for said at least one device to access said protected space managed by said at least one device;
- an instruction for the user to interact with at least said at least one device.

17. The system (1) according to any of claims 1 to 16, wherein said system is further configured to interact with an additional authentication system for securely authenticating said user to access said protected space.

18. The system (1) according to any of claims 4 to 17, wherein the associated data channel for the first biometric data is an EOG or an EMG channel and the associated data channel for the second biometric data is an EEG channel.
